# EUROPÄISCHE PATENTSCHRIFT

(11) **EP 2 985 185 B1**
(45) Veröffentlichungstag und Bekanntmachung des Hinweises auf die Patenterteilung: **27.03.2019**
(21) Anmeldenummer: 15180072.9
(22) Anmeldetag: 06.08.2015
(51) Int. Cl.: B60R 9/06, B60R 9/10

(54) **FAHRRADTRÄGER**
BICYCLE CARRIER
PORTE-VELO

(30) Priorität: 12.08.2014 DE 102014011779; 29.05.2015 DE 102015108555
(43) Veröffentlichungstag der Anmeldung: 17.02.2016
(73) Patentinhaber: WESTFALIA - Automotive GmbH, 33378 Rheda-Wiedenbrück (DE)
(72) Erfinder: AUFDERHEIDE, Reinhold, 33397 Rietberg (DE); PEITZ, Jürgen, 33449 Langenberg (DE)
(74) Vertreter: Patentanwälte Bregenzer und Reule Partnerschaftsgesellschaft mbB

(56) Entgegenhaltungen:
- EP-A1- 0 041 889
- DE-A1- 10 309 327
- DE-C1- 4 213 216
- US-A- 2 512 267
- US-A- 3 891 132

## Beschreibung

Die Erfindung betrifft einen Fahrradträger zur Anordnung an einem Heck eines Kraftfahrzeugs gemäß dem Oberbegriff des Anspruchs 1.

Ein derartiger Fahrradträger ist beispielsweise aus DE 42 13 216 C1 bekannt.

Ein weiterer Fahrradträger ist beispielsweise in DE 10 2007 023 495 A1 erläutert. Bei den Stützen handelt es sich beispielsweise um Rinnen, die zwischen einer Gebrauchsstellung und einer Nichtgebrauchsstellung an Seitenträgern eines Tragegestells des Fahrradträgers schwenkbar gelagert sind. Zudem sind die Rinnen noch längs ihrer Schwenkachse verschieblich gelagert. Wenn die Rinnen in die Gebrauchsstellung gebracht sind, also nach außen vor das Tragegestell vorgeschwenkt sind, können auf ihnen Fahrräder abgestellt werden. Zur Abstützung der auf den Rinnen stehenden Fahrräder dient eine U-förmige Stütze, die in einer Gebrauchsstellung nach oben vor das Tragegestell vorsteht und in eine Nichtgebrauchsstellung gebracht werden kann, wo sie zwischen den Seitenträgern des Tragegestells angeordnet ist.

Die Fahrräder sind nicht immer optimal zu der Stütze positioniert, um beim Fahrbetrieb des Kraftfahrzeugs optimal abgestützt zu sein.

Es ist daher die Aufgabe der vorliegenden Erfindung, einen verbesserten Fahrradträger bereitzustellen.

Zur Lösung der Aufgabe ist ein Fahrradträger gemäß der technischen Lehre des Anspruchs 1 vorgesehen.

Es ist dabei ein Grundgedanke, dass die Stütze relativ zu der zu befestigenden Last anhand des Lagers beweglich ist, aber dort, wo sie tatsächlich gebraucht wird, anhand der Befestigungseinrichtung ortsfest bezüglich des Grundträgers bzw. des Tragkörpers festlegbar ist. Der Bediener kann also die Stütze dorthin verstellen, wo sie die Last optimal abstützen kann.

Die Stütze dient dazu, beispielsweise den Rahmen, ein Tretlager oder dergleichen andere Komponente eines Fahrrads abseits der Räder zu halten und zu stützen.

Die mindestens eine Formschlusskontur sorgt für einen zuverlässigen Halt der Stütze bezüglich des Tragkörpers in den Gebrauchsstellungen. Die mindestens eine Formschlusskontur umfasst beispielsweise mindestens eine Verdrehsicherungskontur, die eine Verdrehsicherung der Stütze bezüglich des Tragkörpers bereitstellt. Weiterhin kann die Formschlusskontur auch eine in einer Verschieberichtungen entlang der Stellachse wirksame Sicherungskontur sein.

Eine bevorzugte Ausführungsform der Erfindung sieht vor, dass die mindestens eine Stütze anhand des Lagers nicht nur zwischen den beiden Gebrauchsstellungen (oder weiteren Gebrauchsstellungen) bezüglich des Grundträgers oder des Tragkörpers beweglich gelagert ist, sondern auch noch in eine Nichtgebrauchsstellung an dem Grundträger oder Tragkörper beweglich gelagert ist. In der Nichtgebrauchsstellung ist die Stütze näher zu dem Grundträger hin verstellt als in den Gebrauchsstellungen. Beispielsweise liegt die Stütze in der Nichtgebrauchstellung an dem Grundträger an. Es ist auch möglich, dass die Stütze in der Nichtgebrauchstellung an einem Tragegestell, beispielsweise dem oben genannten Tragegestell, das am Grundträger ortsfest oder beweglich gelagert ist, anliegt. Möglich ist aber auch, dass die Stütze selbst in der Nichtgebrauchstellung einen gewissen Abstand zu dem Tragegestell oder Grundträger hat. Allerdings ist der Platzbedarf des Fahrradträgers geringer, wenn die Stütze in der Nichtgebrauchstellung nicht vor das Tragegestell oder den Grundträger vorsteht oder daran anliegt.

Die mindestens zwei Gebrauchsstellungen sind beispielsweise bezüglich der Stellachse nebeneinander vorgesehen. Es ist aber auch möglich, dass mindestens zwei Schwenkstellungen als Gebrauchsstellungen vorgesehen sind, d.h. dass die mindestens eine Stütze zwischen den Gebrauchsstellungen schwenkbar ist und in den jeweiligen Gebrauchsstellungen bezüglich des Tragkörpers ortsfest festlegbar ist.

Die Formschlusskontur und die Gegen-Formschlusskontur wirken zweckmäßigerweise bezüglich aller Bewegungsfreiheitsgrade, die die mindestens eine Stütze bezüglich des Tragkörpers anhand des Lagers hat.

Beispielsweise wirken die Formschlusskontur und die Gegen-Formschlusskontur als Drehverriegelung, wenn die Stütze um die Stellachse schwenkbar an dem Tragkörper gelagert ist.

Wenn die Stütze entlang der Stellachse verschieblich an dem Tragkörper gelagert ist, wirken die Formschlusskontur und die Gegen-Formschlusskontur zweckmäßigerweise als Verschiebesicherung bezüglich der Stellachse oder Verriegelung bezüglich einer Verschiebung bezüglich der Stellachse.

Es ist auch möglich, dass die Formschlusskontur und die Gegen-Formschlusskontur im Sinne einer Drehverriegelung der Stütze bezüglich der Stellachse wirken, jedoch im Sinne einer Verschieblichkeit der Stütze bezüglich der Stellachse unwirksam sind. Als Fixierung der mindestens einen Stütze bezüglich der Verschieblichkeit entlang der Stellachse dient dann beispielsweise eine Klemmeinrichtung der Befestigungseinrichtung.

Ferner ist es möglich, dass die Formschlusskontur und die Gegen-Formschlusskontur sozusagen nur unidirektional wirken, beispielsweise als Drehanschlag der mindestens einen Stütze, sodass sie bei einer Verschwenkung um die Stellachse in der einen Richtung an dem Drehanschlag anschlägt, in der Gegenrichtung jedoch nicht. In der Gegenrichtung kann beispielsweise das an der Stütze zu befestigende oder befestigte Fahrrad als Gegenanschlag dienen.

Die Formschlusskontur und die Gegen-Formschlusskontur können vielfältig ausgestaltet sein. An dieser Stelle sei bemerkt, dass selbstverständlich auch mehrere Formschlusskonturen und/oder mehrere Gegen-Formschlusskonturen möglich sind. Es ist zum Beispiel möglich, dass an der Stütze eine einzige Anordnung von Formschlusskonturen vorgesehen ist, die mit mehreren dem Tragkörper zugeordneten Gegen-Formschlusskonturen in Abhängigkeit von der jeweiligen Stellung, insbesondere Gebrauchsstellung oder Nichtgebrauchstellung, der Stütze in Eingriff gebracht werden kann.

Erfindungsgemäß ist vorgesehen, dass die mindestens eine Formschlusskontur eine Verriegelungsaufnahme und ein Riegelelement umfasst, die in einer Verriegelungsstellung in einem Eingriff miteinander sind, in einer Lösestellung jedoch außer Eingriff miteinander sind. Beispielweise ist das Riegelelement beweglich an der Stütze gelagert und greift in eine Riegelaufnahme des Tragkörpers oder eines sonstigen mit dem Tragkörper verbundenen Körper ein. Dieser zusätzliche Körper ist zum Beispiel an dem Grundträger angeordnet oder mit diesem verbunden.

Zweckmäßigerweise ist vorgesehen, dass das Riegelelement anhand einer Feder oder Federanordnung in Richtung der Verriegelungsstellung federbelastet ist.

Eine vorteilhafte Ausgestaltung der Erfindung sieht vor, dass die mindestens eine Gegen-Formschlusskontur eine sich entlang der Stellachse erstreckende, insbesondere als Nut oder Vorsprung ausgestaltete Gegen-Formschlusskontur aufweist. Beispielsweise sind an dem Tragkörper entsprechende Nuten oder Vorsprünge angeordnet. In diese greift ein entsprechender Vorsprung oder eine Aufnahme der Stütze formschlüssig ein, um in Bezug auf die Stellachse einen formschlüssigen Halt der Stütze bezüglich des Grundträgers oder des Tragkörpers zu ermöglichen.

Beispielsweise kann an dem Tragkörper oder einem sich neben dem Tragkörper erstreckenden oder neben dem Tragkörper angeordneten Stützkörper eine Gegen-Formschlusskontur angeordnet sein. Die Gegen-Formschlusskontur weist beispielsweise die erwähnte lang gestreckte Gestalt auf. Mithin kann also am Tragkörper selbst eine Gegen-Formschlusskontur angeordnet sein. Es ist aber auch möglich, dass an dem Stützkörper neben dem Tragkörper eine entsprechende Gegen-Formschlusskontur angeordnet ist.

Die Gegen-Formschlusskontur kann sich beispielsweise über eine gesamte Länge des Tragkörpers oder des neben dem Tragkörper angeordneten Stützkörpers erstrecken. Erfindungsgemäß vorgesehen ist aber die folgende Konfiguration, bei der neben der Gegen-Formschlusskontur ein Freiraum für die der Stütze zugeordnete Formschlusskonturen vorgesehen ist, durch den die Formschlusskontur an der Gegen-Formschlusskontur bei einem Schwenken um die Stellachse vorbei schwenken kann. Somit ist es beispielsweise möglich, die Stütze entlang der Stellachse zunächst zu verschieben, sodass die Formschlusskontur dem Freiraum gegenüberliegt und anschließend die Stütze beispielsweise zwischen den Gebrauchsstellungen und/oder mindestens einer Gebrauchsstellung und einer Nichtgebrauchsstellung, die später noch erläutert wird, schwenkbar ist.

Eine zweckmäßige Ausgestaltung der Erfindung sieht vor, dass das Lager ein Schiebelager umfasst, an dem die mindestens eine Stütze entlang der Stellachse oder Längsachse zwischen den mindestens zwei Gebrauchsstellungen verstellbar ist.

Weiterhin ist es möglich, dass das Lager ein Schwenklager umfasst, an dem die mindestens eine Stütze um eine Stellachse, die somit eine Schwenkachse bildet, schwenkbar zwischen den mindestens zwei Gebrauchsstellungen verstellbar ist.

Eine besonders bevorzugte Ausführungsform der Erfindung, die in der Zeichnung näher erläutert ist, sieht vor, dass die mindestens eine Stütze um eine Schwenkachse schwenkbar und entlang der Schwenkachse verschieblich bezüglich des Tragkörpers gelagert ist. Mithin ist also die mindestens eine Stütze bezüglich der Stellachse verschieblich und schwenkbar bezüglich des Tragkörpers gelagert. Dadurch ergeben sich besonders viele Freiheitsgrade.

Die Stellachse, beispielsweise die Längsachse des Schiebelagers oder die Schwenkachse des Schwenklagers, erstreckt sich zweckmäßigerweise quer zu einer Fahrtrichtung des Kraftfahrzeugs. Zweckmäßigerweise ist also die Stellachse quer zur Fahrzeuglängsrichtung oder parallel zur Fahrzeugquerrichtung orientiert. Es ist ohne weiteres möglich, dass die Stellachse jedoch auch eine zum Beispiel schräg zur Fahrzeuglängsrichtung verlaufende Stellachse ist.

An dem Tragkörper, beispielsweise dem Lager, sind zweckmäßigerweise mehrere Stützen, beispielsweise eine erste Stütze und mindestens eine zweite Stütze, jeweils zwischen mindestens zwei Gebrauchsstellungen beweglich gelagert. Die beiden Stützen oder auch weitere Stützen können zudem auch in eine Nichtgebrauchsstellung anhand des Lagers verstellbar gelagert sein.

Neben dem Tragkörper ist zweckmäßigerweise ein Stützkörper angeordnet. Der Stützkörper und der Tragkörper sind vorteilhaft langgestreckt. Der Stützkörper verläuft zweckmäßigerweise parallel zu der Stellachse. Es ist auch möglich, dass neben dem Tragkörper mehrere Stützkörper angeordnet sind.

Vorteilhaft ist vorgesehen, dass die mindestens eine Stütze in mindestens einer der Gebrauchsstellungen an dem Stützkörper abgestützt ist. Die Abstützung der mindestens einen Stütze an dem Stützkörper ist zweckmäßigerweise eine Drehabstützung. Die Drehabstützung ist vorteilhaft bezüglich der Stellachse in zumindest einer Drehrichtung, kann aber auch eine sozusagen bidirektionale Abstützung sein, also eine Drehabstützung in einander entgegengesetzte Drehrichtungen. Somit kann der Stützkörper als Verdrehsicherung ausgestaltet sein oder eine Verdrehsicherung aufweisen. Beispielsweise ist als Verdrehsicherung eine Rippe oder eine Nut am Stützkörper vorgesehen, an der sich die Stütze mit ihrer Formschlusskontur abstützt.

Zweckmäßigerweise umfasst die Befestigungseinrichtung eine Klemmeinrichtung zum Verklemmen der mindestens einen Stütze bezüglich des Tragkörpers oder an dem Tragkörper. Die Klemmeinrichtung kann die Stütze direkt mit dem Tragkörper verklemmen. Es ist auch möglich, die Klemmeinrichtung die Stütze mit einem anderen, bezüglich eines Tragkörpers ortsfesten Körper zu verklemmen, z.B. einem Stützkörper neben dem Tragkörper. Zweckmäßigerweise ist vorgesehen, dass die Klemmeinrichtung zur Verklemmung der Stütze mit dem Tragkörper und gleichzeitig mit dem Stützkörper neben dem Tragkörper vorgesehen und/oder ausgestaltet ist.

Eine bevorzugte Ausführungsform der Erfindung sieht vor, dass die Klemmeinrichtung einen Klemmkörper, beispielsweise eine Klemmschelle, umfasst, der von dem Tragkörper durchdrungen ist. Es ist aber auch möglich, dass die Klemmeinrichtung einen Widerlagerkörper aufweist, beispielsweise einen L-förmigen Schenkel, an dem der Tragkörper, zum Beispiel das Tragprofil, vorbei verläuft und gegenüber dem der Klemmkörper zwischen der Lösestellung und der Fixierstellung verstellbar ist.

Zweckmäßigerweise weist die Befestigungseinrichtung einen Klemmkörper oder einen Widerlagerkörper auf, der die Formschlusskontur aufweist oder bildet. Der Klemmkörper oder Widerlagerkörper ist mit der dem Tragkörper zugeordneten Gegen-Formschlusskontur in Eingriff bringbar. Somit kann die Verschiebesicherung oder Verdrehsicherung der Stütze bezüglich des Tragkörpers realisiert werden.

Eine besonders bevorzugte Ausführungsform der Erfindung sieht vor, dass die Befestigungseinrichtung einen Klemmkörper in Gestalt einer Klemmschelle umfasst, von der mindestens ein freier Endbereich mit der dem Tragkörper zugeordneten Gegen-Formschlusskontur in Eingriff bringbar ist. Zweckmäßigerweise ist vorgesehen, dass zwei freie Endbereiche der Klemmschelle mit der Gegen-Formschlusskontur in Eingriff bringbar sind. Beispielsweise ist die Gegen-Formschlusskontur als Formschlussvorsprung ausgestaltet, insbesondere neben dem Tragkörper an dem Stützkörper angeordnet. Der Formschlussvorsprung ist vorzugsweise stegartig oder lang gestreckt. Die freien Endbereiche der Klemmschelle können mit dem Formschlussvorsprung in Eingriff gebracht werden. Der Formschlussvorsprung ist zweckmäßigerweise zwischen den freien Endbereichen oder Schenkeln der Klemmschelle klemmbar.

Ein Handbetätigungselement, zum Beispiel ein Handrad, ein Schwenkhebel oder dergleichen, der Befestigungseinrichtung ist zweckmäßigerweise an einem von dem Tragkörper entfernten Endbereich der mindestens einen Stütze angeordnet. Es ist möglich, dass das Handbetätigungselement direkt an dem freien Ende, zum Beispiel am Kopf oder der oberen Stirnseite, der mindestens einen Stütze angeordnet ist. Jedenfalls kann das Handbetätigungselement am freien Endbereich der Stütze bequem ergriffen werden. Das Handbetätigungselement ist durch mindestens ein Übertragungselement, beispielsweise eine Welle, einen Seilzug oder dergleichen, mit Befestigungsmitteln der Befestigungseinrichtung bewegungsgekoppelt, die im Bereich des Tragkörpers angeordnet sind. Die Befestigungsmittel sind anhand des Handbetätigungselements zwischen einer Lösestellung, in welcher die mindestens eine Stütze bezüglich des Tragkörpers verstellbar ist, zum Beispiel zwischen den Gebrauchsstellungen und/oder der Nichtgebrauchsstellung, und einer Fixierstellung, in welcher die mindestens eine Stütze bezüglich des Tragkörpers ortsfest festgelegt ist, betätigbar.

Beispielsweise umfassen die Befestigungsmittel die Klemmmittel, welche anhand des Handbetätigungselements betätigbar sind. Es ist aber auch möglich, dass die Befestigungsmittel Riegelmittel, beispielsweise die bereits erwähnte Riegelaufnahme und den Riegel umfassen, die anhand des Handbetätigungselements in Eingriff und/oder außer Eingriff miteinander gebracht werden können.

Der Tragkörper kann einen Bestandteil eines Tragegestells bilden. Das Tragegestell kann beispielsweise den Grundträger darstellen oder bilden. Es ist auch möglich, dass das Tragegestell an dem Grundträger ortsfest befestigt ist, Beispielweise verschraubt oder dergleichen. Weiterhin ist es möglich, dass das Tragegestell an dem Grundträger anhand eines Lagers, insbesondere eines Schwenklagers, zwischen einer Ladestellung und einer Fahrstellung verstellbar ist. In der Ladestellung ist das Tragegestell von dem Grundträger weiter entfernt, jedenfalls so bezüglich des Grundträgers positioniert, dass ein Gepäcksabteil des Kraftfahrzeugs besser zugänglich ist. So ist beispielsweise das Tragegestell vom Grundträger weggeschwenkt, sodass ein größerer Abstand zwischen einerseits dem Tragegestell und andererseits einem Gepäckraum des Kraftfahrzeugs vorhanden ist. In der Fahrstellung hingegen ist das Tragegestell zum Grundträger hin bewegt. Beispielweise ist das Tragegestell dann auf dem Grundträger abgestellt. Das Tragegestell nimmt dann eine im Wesentlichen horizontale Position vorteilhaft ein.

Die vorgenannten Ausführungen bezüglich des Tragkörpers treffen auch für den Stützkörper zu, der neben dem Tragkörper angeordnet sein kann oder neben dem Tragkörper verläuft. Auch dieser Stützkörper kann ein Bestandteil eines Tragegestells des Grundträgers bilden.

Zweckmäßigerweise ist der Tragkörper und/oder der Stützkörper als eine Strebe des Tragegestells ausgestaltet oder bildet eine Strebe.

Der Tragkörper und/oder der Stützkörper kann auch als ein Querverbinder oder Querträger des Tragegestells ausgestaltet sein.

Bevorzugt ist der Tragkörper und/oder der Stützkörper von einem Trägerprofil gebildet oder umfasst ein Trägerprofil. Bevorzugt ist der Tragkörper rohrförmig.

Zweckmäßigerweise ist vorgesehen, dass die Montageeinrichtung mindestens einen langgestreckten Eingreifkörper zum Eingriff in einen Tretlager-Innenraum eines Tretlagers des Fahrrads aufweist, wobei sich der Tretlager-Innenraum entlang der Drehachse des Tretlagers erstreckt, und dass die Stütze einen Stützkörper und einen Widerlagerkörper aufweist, die in einem montierten und das Fahrrad haltenden Haltezustand der Montageeinrichtung einander gegenüberliegen und voneinander abgewandte Stirnseiten des Tretlagers oder einer neben dem Tretlager angeordneten Komponente des Fahrrads, insbesondere eines das Tretlager aufnehmenden Rahmenbereichs des Rahmens, stützen, wobei sich in dem Haltezustand der mindestens eine Eingreifkörper zwischen dem Widerlagerkörper und dem Stützkörper erstreckt und in den Tretlager-Innenraum eingreift.

Die Lösung wird ferner ein Fahrradträger vorgeschlagen, der eine derartige Stütze aufweist.

Beispielsweise ist das Tretlager seitlich von Rahmenbereichen des Fahrrads begrenzt, die zur Abstützung des Stützkörpers oder des Widerlagerkörpers geeignet sind. Es ist aber auch möglich, dass beispielsweise eine Kurbel für ein Pedal des Fahrrads an dem Tretlager montiert ist und sich der Stützkörper oder Widerlagerkörper an einer solchen Kurbel abstützen. In allen Fällen wird jedenfalls der Tretlager-Innenraum von der Montageeinrichtung zur Befestigung des Fahrrads am Fahrradträger genutzt. Der Eingreifkörper greift zweckmäßigerweise in eine Durchtrittsöffnung an einer jeweiligen Kurbel ein. Die Kurbel oder die Kurbeln, die am Tretlager befestigt sind, haben zweckmäßigerweise mit dem Tretlager-Innenraum fluchtende Durchtrittsöffnungen, die von der Montageeinrichtung durchsetzt oder genutzt sind. Mit anderen Worten dient also vorzugweise die Umgebung des Tretlagers zur Abstützung an der Montageeinrichtung des Fahrradträgers.

Es ist ein Grundgedanke der vorliegenden Erfindung, dass der Rahmen des Fahrrads im Bereich des Tretlagers fixiert wird, wobei die Montageeinrichtung der Stütze nicht die Kurbeln des Fahrrads seitlich klemmt, was zu Beschädigungen führen könnte, sondern anhand des mindestens einen Eingreifkörpers in den Tretlager-Innenraum eingreift und dort zu einem besonders günstigen und festen Halt führt.

Das Befestigungskonzept gemäß der Erfindung ist so vorteilhaft, dass es zwar optional möglich ist, Räder des Fahrrads oder den Rahmen des Fahrrads auch an anderer Stelle noch zusätzlich zu befestigen, beispielsweise durch Klemmen, Riemen oder dergleichen. Das ist aber nicht notwendig. Die Stütze vermag das Fahrrad so fest am Tragkörper oder Tragegestell des Fahrradträgers zu halten, dass es diese zusätzlichen Haltemittel nicht braucht.

Bevorzugt bildet der Stützarm der Stütze den Widerlagerkörper oder der Widerlagerkörper ist an dem Stützarm angeordnet. Mithin kann also der Widerlagerkörper einen integralen Bestandteil des Stützarms bilden.

Der Tretlager-Innenraum ist vorzugsweise als eine Tretlager-Durchtrittsöffnung ausgestaltet, sodass er von dem mindestens einen Eingreifkörper vollständig durchsetzt werden kann. Der Eingreifkörper oder die Anordnung von Eingreifkörpern steht also mit seinen/ihren Längsenden vor die Tretlager-Durchtrittsöffnung vor.

Zu dem Tretlager-Innenraum ist noch nachzutragen, dass er im Wesentlichen zylindrisch sein kann. Auch bei an Kurbeln, die am Tretlager befestigt sind, vorgesehenen Durchtrittsöffnungen ist es vorteilhaft, wenn sie im Wesentlichen zylindrisch sind.

Bevorzugt ist es, wenn der Stützkörper und/oder der Widerlagerkörper eine manuelle Bedienhandhabe, beispielsweise einen Hebel, Drehknauf oder Kniehebel aufweist oder dadurch gebildet ist.

Der Widerlagerkörper und/oder der Stützkörper sind beispielsweise als Handrad, Handknebel oder dergleichen manuell zu bedienende Handhabe ausgestaltet oder mit einer sonstigen Handhabe versehen.

Bevorzugt weist der Widerlagerkörper und/oder der Stützkörper ein Schloss auf. Wenn das Schloss die Schließstellung einnimmt, kann der Widerlagerkörper oder Stützkörper nicht mehr von dem Eingreifkörper entfernt werden. Das Schloss löst beispielsweise einen Schraubeingriff des Widerlagerkörpers oder Stützkörpers von einem Gewindeabschnitt des Eingreifkörpers. Das Schloss kann auch eine Drehkoppelung oder Drehentkopplung bewirken, sodass nur bei einer drehfesten Koppelung (entsprechend der Offenstellung des Schlosses) die Montageeinrichtung von der Lösestellung in die Haltestellung oder umgekehrt bringbar ist.

Es ist auch möglich, dass die Stütze an einem Grundträger des Fahrradträgers, beispielsweise an einer Tragplatte, einem Tragegestell oder dergleichen, anhand eines Schlosses verschließbar ist. Das Schloss bildet beispielsweise einen Bestandteil der Stütze oder des Grundträgers. Es ist auch möglich, dass an der Stütze oder dem Grundträger oder beiden Aufnahmen, beispielsweise Durchstecköffnungen oder dergleichen, für ein Schloss vorgesehen sind. In diesem Fall kann das Schloss auch eine Komponente darstellen, die nicht dauerhaft an der Stütze oder dem Grundträger verbleiben muss, sondern als ein separates Bauteil ausgestaltet ist.

Der Eingreifkörper umfasst zweckmäßigerweise einen Zugstab oder wird durch einen Zugstab gebildet. Der Zugstab ist in dem Haltezustand am Stützarm festgelegt, zumindest auf Zug festgelegt, und trägt andererseits den Stützkörper, so dass das Tretlager des Fahrrads zwischen dem Stützarm und dem Stützkörper gehalten ist. Beispielsweise ist das Tretlager oder jedenfalls der Bereich des Rahmens des Fahrrads, der das Tretlager aufnimmt, zwischen den Stützarm und den Stützkörper geklemmt.

Der Zugstab kann dauerhaft fest an der Stütze angeordnet sein. Der Zugstab kann beispielsweise einen integralen Bestandteil der Stütze bilden. Es ist aber auch möglich, dass der Zugstab von der Stütze lösbar ist, beispielsweise durch eine Bohrung oder ein Langloch der Stütze hindurch gesteckt werden kann, eben aber auch auf diesem Weg wieder entfernt werden kann.

Am Stützarm ist beispielsweise ein Langloch oder eine Anordnung von mindestens zwei Durchtrittsöffnungen vorhanden, so das der mindestens eine Eingreifkörper entlang der Längsrichtung des Langlochs verschieblich sein kann oder durch eine der mehreren Durchtrittsöffnungen, durchsteckbar ist, sodass er unterschiedliche Positionen relativ zu den Abstellbereichen für die Räder des Fahrrads einnehmen kann. Dadurch ist eine Anpassung sowohl entlang einer Achse quer zwischen den Rädern oder den Abstellbereichen für die Räder als auch eine Anpassung in Bezug auf einen Höhenabstand zu den Abstellbereichen, d.h. dass die Montageeinrichtung unterschiedliche Höhenpositionen bezüglich der Abstellbereiche einnehmen kann. Mithin ist also auch eine Verstellung der Montageeinrichtung, insbesondere also des mindestens einen Eingreifkörpers, um eine vertikale Achse anhand beispielsweise des Langlochs oder der mindestens zwei Durchtrittsöffnungen ohne weiteres möglich.

Der Zugstab weist zweckmäßigerweise einen Ankerkörper auf, der an dem Stützarm beweglich, beispielsweise linear verschieblich, gelagert ist. Es ist auch möglich, dass am Stützarm mehrere, beispielsweise mindestens zwei, voneinander verschiedene Aufnahmen vorhanden sind, die zur Aufnahme des Ankerkörpers ausgestaltet sind. Die Aufnahmen sind beispielsweise als Durchtrittsöffnungen ausgestaltet, so das beispielsweise der sich von dem Ankerkörper weg erstreckende Abschnitt des mindestens einen Eingreifkörpers durch die jeweilige Durchtrittsöffnung hindurch gesteckt werden kann und dann sozusagen vor den Stützarm vorsteht.

Der Eingreifkörper ist vorzugsweise stabförmig oder umfasst einen Stab.

Bevorzugt ist der mindestens eine Eingreifkörper stabförmig. Beispielsweise ist der Eingreifkörper im Wesentlichen als ein Stab ausgestaltet. Der Eingreifkörper kann beispielsweise ein Gewindestab sein oder einen Gewindestab umfassen.

Der mindestens eine Eingreifkörper umfasst zweckmäßigerweise einen Stabkörper und mindestens eine Hülse, die von dem Stabkörper durchdrungen ist. Die Hülse kann beispielsweise eine Innenhülse sein, die sich am Innenumfang des Tretlager-Innenraums abstützt.

Die Hülse kann aber auch eine Art Stützhülse sein, die zur Anlage an einer Stirnseite des Tretlagers oder des Rahmens des Fahrrads im Bereich des Tretlagers ausgestaltet ist, also dafür passende Anlagekonturen hat. Beispielsweise kann die Stirnseite der Hülse, die am Tretlager oder Rahmen anliegt, domförmig oder muldenförmig sein.

Die Hülse kann aber auch als ein Distanzelement dienen. Bevorzugt ist nämlich vorgesehen, dass die Stütze eine Hülse oder einen sonstigen Körper als Distanzelement zur Anordnung zwischen der Stirnseite des Tretlagers (oder des Rahmenbereichs, an welchem das Tretlager angeordnet ist) und dem Widerlagerkörper oder dem Stützkörper aufweist. Es können beispielsweise zwei Distanzelemente vorgesehen sein, eines zwischen dem Widerlagerkörper und der einen Stirnseite des Tretlagers und das andere zur Anlage zwischen dem Stützkörper und der anderen Stirnseite des Tretlagers. Das Distanzelement kann zwar als eine Hülse ausgestaltet sein muss das aber nicht sein. Es ist beispielsweise auch ein seitlich offenes Distanzelement möglich, zum Beispiel ein U-förmiges Distanzelement, wobei der Eingreifkörper in dieses Profil eingreifen kann.

Bevorzugt ist zwar nur ein einziger Eingreifkörper vorgesehen, der den Tretlager-Innenraum durchsetzt und an seinen Längsendbereichen einerseits den Stützkörper trägt und andererseits beispielsweise die Stütze oder den Stützarm durchsetzt oder jedenfalls am Stützarm angeordnet ist.

Es ist aber auch möglich, dass der Eingreifkörper mehrteilig ist. So ist es beispielsweise möglich, dass zwei oder weitere Teile eines Eingreifkörpers miteinander verschraubbar oder in anderer Weise miteinander verbindbar sind, um eine Längslänge des Eingreifkörpers an die Länge des Tretlager-Innenraums anzupassen.

Es ist aber auch möglich, dass der mindestens eine Eingreifkörper beispielsweise zweiteilig ist oder zwei Komponenten umfasst. Die beiden Eingreifkörper oder Eingreifkörperteile greifen voneinander entgegengesetzten Seiten her in den Tretlager-Innenraum ein. Dort können sie unverbunden bleiben oder in einer bevorzugten Ausführungsform der Erfindung miteinander verbunden werden.

In dem letzteren Fall weisen die Eingreifkörper an ihren freien Endbereichen vorteilhaft Verbindungsmittel auf, die zur Verbindung der Eingreifkörper miteinander in dem Tretlager Innenraum geeignet sind. Beispielsweise sind Schraubmittel vorgesehen. So können beispielsweise der eine Eingreifkörper eine Schraubaufnahme und der andere Eingreifkörper einen Schraubvorsprung haben, der in die Schraubaufnahme des erstgenannten Eingreifkörpers einschraubbar ist.

Es ist dabei beispielsweise möglich, dass der eine Eingreifkörper sozusagen einen Vorsprung vor den Stützkörper darstellt, während der andere Eingreifkörper einen Vorsprung des Widerlagerkörpers bildet oder jedenfalls vor den Stützarm vorsteht. Es ist auch möglich, dass einer der Eingreifkörper, beispielsweise derjenige mit der Schraubaufnahme, fest an dem Stützarm angeordnet ist und somit vor diesen vorsteht. Somit kann also der andere Eingreifkörper von der entgegengesetzten Seite des Tretlagers her in den erstgenannten, am Stützarm angeordneten Eingreifkörper eingeschraubt werden oder auf den Eingreifkörper aufgeschraubt werden. Es versteht sich, dass die Schraubaufnahme und der Schraubvorsprung beliebig an den jeweiligen Eingreifkörpern vorgesehen werden können.

Es ist aber auch möglich, dass die Eingreifkörper beispielsweise miteinander verrastet werden oder miteinander verklinkt, wenn sie im Innenraum des Tretlagers miteinander zu verbinden sind. Mithin können also die Verbindungsmittel an den freien Endbereichen der Eingreifkörper auch Rastmittel, Halteklinken oder dergleichen andere lösbare Verbindungsmittel umfassen.

Zweckmäßigerweise ist vorgesehen, dass die Montageeinrichtung, beispielsweise der Eingreifkörper, ein Ankerkörper des Zugstabes oder der Zugstab, an dem Stützarm beweglich, beispielsweise linear verschieblich und/oder schwenkbar, anhand einer Lagerung oder eines Lagers gelagert ist. Es ist weiterhin möglich, dass die Montageeinrichtung an mindestens zwei voneinander verschiedenen Aufnahmen oder Montageorten des Stützarms lösbar befestigbar ist. Somit kann eine jeweilige Höhe oder ein Abstand der Montageeinrichtung relativ zu den Abstellbereichen eingestellt werden, das heißt die Montageeinrichtung optimal in Bezug auf die Höhe oder den Abstand zu den Abstellbereichen angeordnet und somit relativ zum Tretlager des Fahrrads positioniert werden.

Eine zweckmäßige Ausgestaltung der Erfindung sieht vor, dass die Montageeinrichtung anhand einer Bedienhandhabe zwischen einer Fixierstellung und einer Lösestellung betätigbar ist. Beispielsweise ist ein Handrad vorgesehen, mit dem der Eingreifkörper und/oder der Ankerkörper und/oder der Widerlagerkörper betätigbar ist, um auf diese Weise den Eingriff in das Tretlager des Fahrrads zu lösen, sodass dieses vom Fahrradträger entfernt werden kann (entspricht der Lösestellung). Umgekehrt ist auch die Betätigung in die Fixierstellung möglich, bei der dann die Montageeinrichtung das Fahrrad anhand des Tretlagers am Fahrradträger fixiert. Beispielsweise wird ein Handrad oder ein Drehknauf auf einen entsprechenden Zugstab, der das Tretlager durchsetzte, aufgeschraubt.

Zweckmäßigerweise ist in diesem Zusammenhang vorgesehen, wenn mit ein und derselben Bedienhandhabe, beispielsweise dem Handrad, gleichzeitig auch die Fixierung der Montageeinrichtung bezüglich des Stützarms gelöst oder hergestellt werden kann. Wird die Montageeinrichtung geöffnet oder gelöst, sodass das Tretlager nicht mehr fixiert ist, wird gleichzeitig die Fixierung der Montageeinrichtung bezüglich des Stützarms gelöst.

Eine Variante sieht dabei beispielsweise vor, dass der Zugstab oder Eingreifkörper den Stützarm durchsetzt und durch eine Betätigung der Bedienhandhabe in Richtung der Lösestellung beispielsweise vom Stützarm entfernt werden kann oder relativ zum Stützarm verschieblich wird. Eine andere, in der Zeichnung ebenfalls dargestellte Variante sieht vor, dass der Zugstab oder Eingreifkörper sowohl zum Eingriff in das Drehlager vorgesehen ist, zum andern aber auch eine Klemmschelle durchsetzt, die zum Verklemmen der Montageeinrichtung an dem Stützarm vorgesehen ist.

Der mindestens eine Eingreifkörper ist zweckmäßigerweise an dem Stützarm anhand eines Lagers beweglich, beispielsweise verschieblich, verschwenkbar oder beides, zur Einstellung eines Abstands des mindestens einen Eingreifkörpers bezüglich der Abstellbereiche für die Räder des Fahrrads gelagert. Beispielsweise kann auf diesem Weg ein Vertikalabstand oder eine Höhe des Eingreifkörpers bzw. der Montageeinrichtung an die jeweilige Rahmenhöhe bzw. Höhe des Tretlagers bezüglich der Aufstandsflächen der Räder angepasst werden.

Eine zweckmäßige Ausgestaltung der Erfindung sieht vor, dass die Montageeinrichtung eine Halterung, insbesondere eine Klemmhalterung, zum Beispiel eine Klemmschelle, aufweist, die an dem Stützarm verschieblich und/oder verschwenkbar gelagert ist. Die Halterung kann mit dem Stützarm verklemmbar und/oder formschlüssig fixierbar, beispielsweise verriegelbar, sein. Es ist möglich, dass die Halterung am Stützarm verschieblich gelagert und in einer jeweiligen Verschiebeposition verklemmbar ist. Es ist aber auch möglich, dass die Halterung am Stützarm nicht verschieblich gelagert ist, sondern zum Umpositionieren jeweils vom Stützarm gelöst und an einer anderen Position wieder am Stützarm verklemmt oder formschlüssig fixiert wird.

Die Halterung kann auch mindestens eine Formschlusskontur aufweisen, die mit einer Gegen-Formschlusskontur am Stützarm in Eingriff gelangt, damit die Montageeinrichtung bezüglich des Stützarms nicht nur reibschlüssig (durch die Verklemmung) sondern auch formschlüssig festlegbar ist. Beispielsweise kann eine Riegelkontur oder ein Riegelvorsprung an einer Klemmschelle oder einem an der Stütze oder dem Stützarm beweglich gelagerten Lagerelement vorgesehen sein, die in eine entsprechende Gegenkontur am Stützarm eingreift.

Eine Ausführungsform der Erfindung kann dabei vorsehen, dass beispielsweise der Eingreifkörper an einem Schlitten oder verschieblich gelagerten Träger am Stützarm beweglich gelagert ist, um unterschiedliche Positionen bezüglich des Stützarms einzunehmen. Eine andere Variante sieht beispielsweise ein Langloch vor, das von dem mindestens einen Eingreifkörper durchsetzt ist und in welchem der Eingreifkörper verschieblich gelagert ist.

Wie gesagt, können aber auch mehrere Durchtrittsöffnungen oder dergleichen andere Aufnahmen für den mindestens einen Eingreifkörper vorgesehen sein, um den Eingreifkörper günstig zum jeweiligen Tretlager zu positionieren.

An dem Lager sind zweckmäßigerweise Klemmmittel, Formschlusskonturen oder beides zum Klemmen oder formschlüssigen Festlegen des Eingreifkörpers an dem Stützarm in dem Haltezustand vorgesehen. Somit kann also der Eingreifkörper zumindest in dem Haltezustand ortsfest am Stützarm festgelegt werden. Es ist dabei denkbar, dass diese Verklemmung oder der formschlüssige Halt oder dergleichen anhand beispielsweise einer Verschraubung, eines Klemmknebels oder dergleichen auch dann herstellbar ist, wenn die Montageeinrichtung gelöst ist, also kein Fahrrad hält. Eine bevorzugte Ausführungsform sieht jedoch vor, dass der formschlüssige Halt oder die Verklemmung des mindestens einen Eingreifkörpers bezüglich des Stützarms dadurch hergestellt wird, dass die Montageeinrichtung den Haltezustand einnimmt, also ein Fahrrad hält. Die Bedienung wird dadurch vereinfacht.

Bevorzugt sind Schließmittel zum Verschließen der Stütze vorgesehen. Beispielsweise sind an einen oder mehreren lösbaren Komponenten der Stützeinrichtung oder der Stütze derartige Schließmittel vorgesehen, zum Beispiel ein Schloss oder Komponenten, die durch ein Schloss betätigbar sind. Insbesondere ist es vorteilhaft, wenn beispielsweise ein als Handknebel oder dergleichen anderes Handbetätigungselement ausgestalteter Stützkörper anhand eines Schlosses verschließbar ist, so dass er nicht mehr in eine Lösestellung bringbar ist, in welcher der Stützkörper beispielsweise von dem mindestens einen Eingreifkörper entfernbar ist.

Eine bevorzugte Ausführungsform sieht vor, dass zur Einstellung eines Abstands zwischen dem mindestens einen Eingreifkörper und den Abstellbereichen für die Räder des Fahrrads die Stütze anhand eines Schiebelagers an einem Tragkörper des Fahrradträgers beweglich gelagert ist. Bei dem Tragkörper handelt es sich beispielsweise um ein Tragegestell, eine Tragplatte oder dergleichen. Auf jeden Fall ist es damit möglich, die Stütze in die richtige Position nahe bei dem Tretlager zu verstellen, sodass die Montageeinrichtung das Tretlager halten kann. Eine andere Variante sieht vor, dass an dem Tragkörper (dem Tragegestell oder dergleichen) des Fahrradträgers mehrere zueinander in einem Abstand angeordnete Halterungen und/oder Schraubaufnahmen für die Stütze vorgesehen sind. Auf diesem Wege kann also die Stütze auch in unterschiedlichen Relativpositionen bezüglich der Abstellbereiche für die Räder an dem Tragkörper festgelegt werden.

Wenn also zum einen die Montageeinrichtung beweglich an dem Stützarm gelagert ist, zum anderen die Stütze als Ganzes, insbesondere der Stützarm, in unterschiedlichen Positionen bezüglich des Tragkörpers oder Traggestell des Fahrradträgers festlegbar ist, ist eine einfache individuelle Anpassung des Fahrradträgers an die jeweilige Geometrie des zu befördernden Fahrrades möglich. Auch die Anordnung mehrerer Fahrräder am Fahrradträger gelingt dadurch leichter, weil sozusagen die Tretlager-Montageeinrichtung der erfindungsgemäßen Stütze in eine solche Position gebracht werden kann, dass sich die Fahrräder nicht gegenseitig am Fahrradträger behindern oder im Weg stehen

Eine bevorzugte Ausführungsform der Erfindung sieht vor, dass der Stützarm sozusagen nach oben vor eine Grundfläche eines Tragkörpers des Fahrradträgers vorsteht. Bei Gebrauch verläuft also eine Längsrichtung des Stützarms im Wesentlichen vertikal.

Es ist aber auch möglich, dass der Stützarm sozusagen horizontal verläuft, wenn er die Gebrauchsstellung einnimmt. Beispielsweise kann der Stützarm an einem U-förmigen Halter oder Träger des Fahrradträgers angeordnet sein und von diesem im Wesentlichen horizontal abstehen.

An einem jeweiligen Stützarm ist zwar vorzugsweise nur ein einziger Eingreifkörper bzw. eine Montageeinrichtung für ein einziges Fahrrad vorgesehen. Somit kann durch eine entsprechende Positionierung des Stützarms relativ zum Tragegestell oder Tragkörper des Fahrradträgers die optimale Position bezüglich des Tretlagers des zu haltenden oder stützenden Fahrrades gefunden werden.

Es ist aber auch möglich, dass an einem Stützarm zwei oder weitere Eingreifkörper mit jeweils einem Stützkörper zum Eingriff in Tretlager zweier oder weiterer Fahrräder angeordnet sind. So kann beispielsweise an einer vertikal nach oben vor das Tragegestell des Fahrradträgers vorstehenden Stütze aneinander entgegengesetzten Seiten jeweils ein Eingreifkörper vorgesehen sein, beispielsweise ein bolzenartige Eingreifkörper, der ein jeweiliges Tretlager eines Fahrrads durchsetzt und auf dessen freien Endbereich jeweils ein Stützkörper aufschraubbar ist, um das Tretlager und somit das Fahrrad sicher zu halten.

Wegen der hoch belastbaren Befestigung des Fahrrads am Fahrradträger anhand der Montageeinrichtung für das Tretlager kann auf weitere Befestigungsmittel, beispielsweise Schlaufen für die Räder des Fahrrades, verzichtet werden. Als zusätzliche Sicherungsmaßnahme sind jedoch durchaus auch Schlaufen, Klammern oder dergleichen beispielsweise zur Sicherung der Räder des Fahrrads an zugeordneten Tragrinnen oder Tragbereichen des Fahrradträgers vorteilhaft.

Nachfolgend werden Ausführungsbeispiele näher erläutert. Es zeigen
- Figur 1: eine perspektivische Schrägansicht eines Fahrradträgers,
- Figur 2: eine Detailansicht einer Stütze des Fahrradträgers gemäß Figur 1 in einer Schrägperspektive,
- Figur 3: die Stütze gemäß Figur 2 seitlich,
- Figur 4: eine alternative Ausführungsform einer Stütze in einer Seitenansicht, die in
- Figur 5: frontal von vorn dargestellt ist,
- Figur 6: einen erfindungsgemäßen Fahrradträger mit einer in
- Figur 7: seitlich dargestellten Stütze, die bezüglich eines Grundträgers anhand eines Tragkörpers verschieblich gelagert ist,
- Figur 8: eine Detailansicht der Stütze und des Tragkörpers gemäß Figur 6, und
- Figur 9: eine perspektivische Darstellung der Anordnung gemäß Figur 7, wobei zusätzlich noch eine weitere Stütze an dem Tragkörper dargestellt ist.

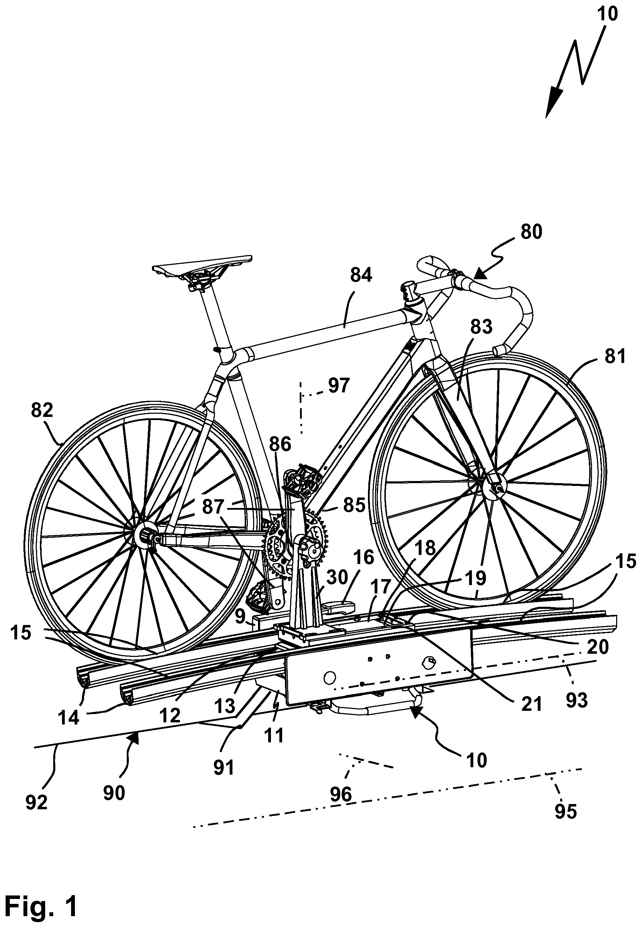

Ein Fahrradträger 10 gemäß Figur 1 ist an einer Anhängekupplung 91 eines schematisch dargestellten Kraftfahrzeugs 90 lösbar befestigt. Der Fahrradträger 10 ist hinten am Heck 92 des Kraftfahrzeugs 90 angeordnet und dient zum Transport von beispielsweise zwei Fahrrädern, wobei dies nur exemplarisch zu verstehen ist, d.h. er könnte auch zum Transport von nur einem oder auch weiteren Fahrrädern ausgestaltet sein.

An einem Grundträger 11 des Fahrradträgers 10, der eine Kupplungseinrichtung 9 zum Ankuppeln an die Anhängekupplung 91 aufweist, ist ein Tragkörper 12 angeordnet. Von der Kupplungseinrichtung 9 ist beispielsweise ein Bedienhebel 16 sichtbar, mit denen die Kupplungseinrichtung von einer Lösestellung, in welcher sie von der Anhängekupplung 91 entfernbar ist, und einer Kupplungsstellung, in welcher die Kupplungseinrichtung 9 beispielsweise mit einer Kupplungskugel oder einer sonstigen Halterung der Anhängekupplung 91 verbunden ist, verstellbar ist. Anstelle der Kupplungseinrichtung für einen Kugelkopf oder eine sonstige Anhängekupplung kann selbst verständlich auch beispielsweise ein Steckvorsprung oder eine Steckaufnahme zum Anstecken an ein entsprechendes Gegenstück am Heck des Kraftfahrzeugs 90 vorgesehen sein.

Der Tragkörper 12 könnte an dem Grundträger 11 fest angeordnet sein. Vorzugsweise ist der Tragkörper 12 jedoch am Grundträger 11 beweglich gelagert, beispielsweise um eine Schwenkachse 93 schwenkbar, sodass er in einer von dem Heck 92 des Kraftfahrzeugs 90 weggeschwenkten Ladestellung ein Beladen eines Kofferraums des Kraftfahrzeugs 90 erleichtert, während er in der Transportstellung, die in der Zeichnung dargestellt ist, zum Abstellen und Transportieren beispielsweise des Fahrrads 80 optimal geeignet ist.

Das Fahrrad 80 weist in an sich bekannter Weise ein Vorderrad 81 und ein Hinterrad 82 auf. Das Vorderrad 81 ist beispielsweise an einer Gabel 83 gehalten, während das Hinterrad 82 in an sich bekannter Weise an einem Rahmen 84 des Fahrrads 80 gelagert ist. An einem unteren Abschnitt 85 des Rahmens 84 befindet sich ein Tretlager 86, dass Tret-Kurbeln 87 drehbar lagert. Das Tretlager 86 weist eine in der Zeichnung nicht sichtbare Tretlager-Durchtrittsöffnung 88 und somit einen Tretlager-Innenraum 89 auf. Durchtrittsöffnungen in der Art der Durchtrittsöffnung 88 sind bei modernen Tretlagern mehr und mehr gebräuchlich.

Der Tragkörper 12 umfasst beispielsweise eine Tragplatte 13, die Rinnen 14 trägt. Die Rinnen 14 stehen seitlich, nämlich in Fahrzeugquerrichtung des Kraftfahrzeugs 90, vor die Tragplatte 13 vor und stellen jeweils Abstellbereiche 15 für die Räder 81, 82 des Fahrrads 80 sowie eines nicht dargestellten weiteren Fahrrads bereit. Die Rinnen 14 sind also muldenartig, so dass die Räder 81, 82 bezüglich der Fahrzeuglängsrichtung des Kraftfahrzeugs 90, also der Fahrtrichtung, seitlichen Halt haben.

An der Oberseite der Tragplatte 13 ist eine beispielsweise plattenartig ausgestaltete Halterung 17 angeordnet, die zum Halten einer Stütze 30 dient. Zusätzlich zu der Stütze 30 könnte noch eine weitere Stütze zum Halten des nicht dargestellten Fahrrads vorgesehen sein, was jedoch selbsterklärend ist.

Die Halterung 17 umfasst beispielsweise eine Linearführung 18, in welcher ein Fuß 31 der Stütze 30 verschieblich gelagert ist. Die Linearführung 18 kann z.B. eine Schiebeaufnahme sein. Beispielsweise kann somit die Stütze 30 bezüglich einer Längsrichtung 95 zwischen den für das Fahrrad 80 vorgesehenen Abstellbereichen 15 hin und her verstellt werden, sodass die Stütze 30 optimal bezüglich des Tretlagers 86 positionierbar ist.

Aber auch zum Transport des Weiteren, nicht dargestellten Fahrrades ist diese Maßnahme vorteilhaft, so dass die beiden Fahrräder mit einem Versatz bezüglich der Längsrichtung 95 zueinander am Fahrradträger 10 befestigt werden können und sich beispielsweise ihre jeweiligen Lenker oder sonstige seitlich vorstehende Teile, insbesondere auch die Kurbeln 87, nicht gegenseitig behindern.

Die Schiebeaufnahme oder Linearführung 18 umfasst beispielsweise nach innen zu einer Bodenfläche 19 für den Fuß 31 vorstehende kragenartige Halteschenkel 21, die vom Fuß 31 untergriffen oder hintergriffen werden. Alternativ oder ergänzend sind Schraubaufnahmen 20 vorgesehen, in die nicht dargestellte Schrauben, die Schraubaufnahmen 32 des Fußes 31 durchdringen, eingeschraubt werden können. Die Schraubaufnahmen 20 sind an verschiedenen Positionen bezüglich der Längsrichtung 95 vorgesehen, sodass es möglich ist, die Stütze 30 in unterschiedlichen Positionen bezüglich der Längsrichtung 95 an der Halterung 17 zu befestigen.

Selbstverständlich wäre es auch möglich, durch entsprechende Schiebelagerung oder zusätzliche Schraubmöglichkeiten (Schraubaufnahmen oder dergleichen) eine Positionierung der Stütze 30 in einer zu der Längsrichtung 95 querverlaufenden Richtung 96 zu ermöglichen, also beispielsweise bezüglich der Fahrzeuglängsrichtung des Kraftfahrzeugs 90.

Es ist auch möglich, dass die Schraubaufnahmen 20 nur an einer einzigen Stelle vorgesehen sind, jedoch der Fuß 31 und somit die Stütze 30 beispielsweise durch die als Langlöcher ausgestalteten Schraubaufnahmen 32 in unterschiedlichen Positionen bezüglich der Längsrichtung 95 oder der Richtung 96 an der Halterung 17 und somit am Tragkörper 12 festlegbar ist.

Die Stütze 30 kann in mehreren Gebrauchsstellungen bezüglich der durch die Linearführung 18 definierten Stellachse, zum Beispiel der Längsrichtung 95, an dem Tragkörper 12 verstellt und jeweils formschlüssig festgelegt werden. Die ineinander eingreifenden Konturen der Linearführung 18 und des Fußes 31 der Stütze 30 stellen dabei zusammenwirkende Formschlusskonturen und Gegen-Formschlusskonturen, z.B. eine Verdrehsicherung, bereit.

Neben der aufgezeigten Möglichkeit, die Stütze 30 anhand einer Verschraubung bezüglich des Tragkörpers 12 oder Grundträgers 11 ortsfest festzulegen, kann selbstverständlich alternativ oder ergänzend auch eine andere Art einer Befestigungseinrichtung 27 zum ortsfesten Festlegen der Stütze 30 am Tragkörper 12 vorgesehen sein.

Es kann zum Beispiel eine Verriegelung vorhanden sein, d.h. dass mindestens ein Riegel 23 die Stütze 30 am Tragkörper 12 verriegelt.

Ferner ist eine Verklemmung möglich, d.h. dass beispielsweise eine Klemme 22, zum Beispiel eine Klemmschelle, eine Klemmschraube, eine Klemmpratze oder dergleichen, zum Verklemmen der Stütze 30 am Tragkörper 12 vorhanden ist.

Es ist beispielsweise möglich, dass an oder in der Halterung 17 und/oder der Linearführung 18 eine Verklemmung, Verriegelung oder dergleichen für die Stütze 30, zum Beispiel den Fuß 31, vorgesehen ist.

Vor den Fuß 31 steht ein Stützarm 33 nach oben ab. Der Stützarm 33 ist durch zusätzliche Rippen 34 verstärkt, wobei die Rippen 34 nach unten, zur Platte bzw. zum Fuß 31 hin vorteilhaft breiter werden und somit entsprechend massiver und belastbarer sind.

Am oberen, freien Endbereich des Stützarms 33, also am vom Fuß 31 entfernten Endbereich des Stützarms 33, ist eine Montageeinrichtung 40 vorgesehen, mit der das Fahrrad 80 an der Stütze 30 befestigbar ist.

Die Montageeinrichtung 40 umfasst einen Eingreifkörper 41, beispielsweise einen Zugstab 42, an dessen einen Endbereich ein Ankerkörper 43 vorgesehen ist. Der Eingreifkörper 41 durchsetzt eine Aufnahme 35, beispielsweise eine Durchtrittsöffnung am freien Endbereich des Stützarms 33. Die Aufnahme 35 ist als ein Langloch ausgestaltet, sodass der Eingreifkörper 41 in unterschiedliche Höhenpositionen bezüglich einer Achse 97 bringbar ist und somit eine optimale Vertikalposition bezüglich des Tretlagers 86 einnehmen kann.

Der Ankerkörper 43 umfasst beispielsweise eine Stützplatte 44, die kragenartig oder flanschartig ausgestaltet ist und sich an einer sich um die Aufnahme 35 herum erstreckenden Stützfläche 36 abstützen kann. Die Stützplatte 44 ist beispielsweise an einem Handrad 45 ortsfest festgelegt oder ortsfest festlegbar. Mit dem Handrad 45 ist der Eingreifkörper 41 sozusagen betätigbar oder ergreifbar, z.B. um ihn um eine Schraubachse 46 zu drehen und/oder ihn zu halten, insbesondere entlang der Aufnahme 35 zu verstellen.

Anhand eines Schlosses 47 ist es dabei möglich, das Handrad 45 mit der Stützplatte 44 drehfest zu koppeln (das Schloss 47 nimmt dann seine Offenstellung ein), so dass die vorgenannte Drehbetätigung des Eingreifkörpers 41 möglich ist. In einer Schließstellung des Schlosses 47 hingegen ist das Handrad 45 von der Stützplatte 44 entkoppelt, so <<dass der Eingreifkörper 41 nicht mehr um die Schraubachse 46 gedreht werden kann.

An der zu der Stützfläche 36 entgegengesetzten Seite des Stützarms 33 erstreckt sich eine weitere stützende Fläche um die Aufnahme 35 herum, die jedoch als eine Widerlagerfläche 37 dient.

Mithin kann also der obere Bereich des Stützarms 33 einen Widerlagerkörper der Montageeinrichtung 40 bilden. An der Widerlagerfläche 37 kann sich nämlich eine Stirnseite 86A des Tretlagers 86 direkt abstützen. Vorliegend jedoch ist jedoch ein Distanzelement 48 vorgesehen, das sich an der Widerlagerfläche 37 abstützt und eine Stützfläche für die Stirnseite 86A des Tretlagers 86 bereitstellt. Mithin stützt sich also das Tretlager 86 am Distanzelement 48 stirnseitig ab. Das Distanzelement 48 bildet einen Widerlagerkörper 59.

Der Eingreifkörper 41 durchsetzt weiterhin eine Hülse 49, die das Distanzelement 48 und ein weiteres Distanzelement 50 auf Distanz hält. Mithin bildet also die Hülse 49 ebenfalls ein Distanzelement, jedoch ein solches, das nicht direkt die Stirnflächen eines Tretlagers abstützt, sondern Distanzelemente zum Abstützen des Tretlagers 86 auf Abstand hält. An dem Distanzelement 50 stützt sich nämlich die zu der Stirnseite 86A entgegengesetzte Stirnseite 86B des Tretlagers 86 ab.

Auf einen freien Endbereich 51 des Eingreifkörpers 41 ist ein Stützkörper 52 aufschraubbar, beispielsweise ein Handrad 58 in der Art des Handrades 45. Das Handrad 45 hat beispielsweise eine Schraubaufnahme 60 für einen Schraubabschnitt am Endbereich 51 des Eingreifkörpers 41. An einem Außenumfang des Handrad 45 und/oder des Handrads 58 sind vorzugsweise Riffelungen 61 oder dergleichen andere eine Handhabung erleichternde Strukturen vorgesehen

Das Handrad 58 kann durch ein weiteres, nicht dargestellte Schloss in der Art des Schlosses 47 verschließbar sein, sodass es in der Schließstellung nicht relativ zu dem Endbereich 51 schraubbar ist und somit das Fahrrad 80 bezüglich der Stütze 30 verschlossen und gesichert ist.

Man erkennt, dass durch Austausch der Distanzelemente 48 und/oder 50 oder der Hülse 49 unterschiedliche Längsabstände zwischen den die Stirnseiten 86A und 86B stützenden Stützflächen 53 und 54 einstellbar sind, d.h. dass die Stützeinrichtung oder Stütze 30 auf unterschiedliche Querbreiten eines jeweiligen Tretlagers 86 einstellbar ist. Es versteht sich, dass auch eine stufenlose Einstellung denkbar ist, d.h. dass beispielsweise teleskopierbare Distanzelemente vorgesehen sind oder dergleichen.

Die Hülse 49 ist vorzugsweise etwas weniger lang als die Innenbreite des Tretlagers 86, d.h. kürzer als beispielsweise die Durchtrittsöffnung 88. Somit ist es möglich, das Tretlager 86 zwischen die Distanzelemente 48, 50 zu klemmen.

Eine Variante kann vorsehen, dass beispielsweise das Distanzelement 48 fest mit dem Stützarm 33 verbunden ist, was die Montage des Fahrrads 80 an der Stütze 30 erleichtern kann.

Weiterhin ist es möglich, dass beispielsweise das Distanzelement 48 mit dem Ankerkörper 43 verbunden ist, sodass die beiden Bauteile sozusagen eine Aufnahme, beispielsweise eine Steckaufnahme oder Schraubaufnahme, für den Eingreifkörper 41 bilden. Beispielsweise ist dieser mit einem in der Zeichnung nicht dargestellten Schraubgewinde in den Ankerkörper 43 einschraubbar.

Eine Variante kann auch vorsehen, dass beispielsweise das Distanzelement 48 und der Ankerkörper 43 durch Federkraft aneinander gehalten werden. Denkbar wäre zum Beispiel eine Variante, dass man das Distanzelement 48 etwas vom Ankerkörper 43 entfernt (entlang der Schraubachse 46 verschiebt), um die diese gesamte Anordnung entlang des Langlochs der Aufnahme 35 zu verschieben, beispielsweise um einen Formschlusseingriff zu lösen oder dergleichen.

Ferner ist es möglich, dass der Eingreifkörper 41 beispielsweise als eine Stufenwelle oder ein Stufenbolzen ausgestaltet ist. Es ist beispielsweise möglich, dass anstelle der Hülse 49 eine entsprechende feste Stufe eines Eingreifelements vorgesehen ist, vor die beispielsweise der Endbereich 51 mit dem entsprechenden Schraubabschnitt vorsteht.

Es ist ohne weiteres natürlich auch möglich, dass bei konstanten Querbreiten eines jeweiligen Tretlagers 86 keine Distanzelemente notwendig sind. Wenn also beispielsweise eine Längslänge des Eingreifkörpers 41 optimal zu einer Querbreite eines Tretlagers 86 passt, könnte man beispielsweise die beiden Distanzelemente 48, 50 weglassen, sodass sich das Tretlager 86 direkt an der Widerlagerfläche 37 sowie einer beim Ausführungsbeispiel das Distanzelement 50 stützenden Stützfläche 55 des Stützkörpers 52 abstützt.

Die Distanzelemente 48, 50 haben aber auch den Vorteil, dass ihre stirnseitige Kontur, nämlich diejenige der Stützflächen 53, 54, an die jeweilige Innenkontur oder Stirnseiten Kontur der Stirnseiten 86A und 86B angepasst sein kann. Das verbessert den Halt.

Der Ankerkörper 43 hat vorteilhaft eine Stufe 56, die in die Aufnahme 35 des Stützarms 33 eingreift. An der Stufe 56 können Formschlusskonturen 57 vorgesehen sein, die zu Formschlusskonturen 38 am Innenumfang der Aufnahme 35 formschlüssigen passen die Formschlusskonturen 57, 38 umfassen beispielsweise Zahnungen, sodass der Ankerkörper 43 in einer jeweils zu der Höhenpositionen des Tretlagers 86 passenden Position bezüglich der Achse 97 formschlüssig festlegbar ist.

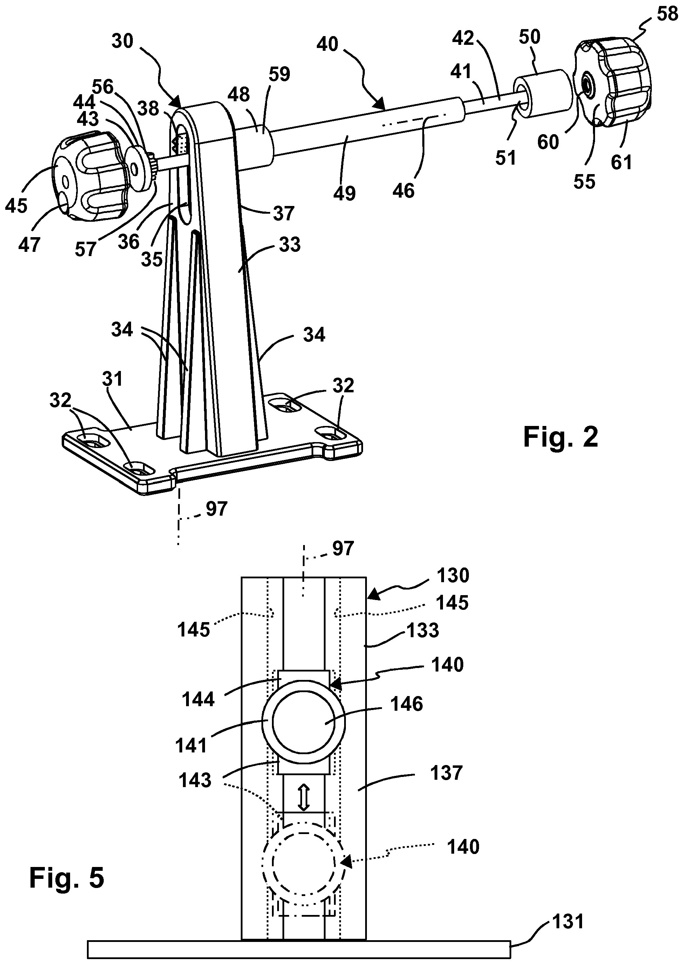

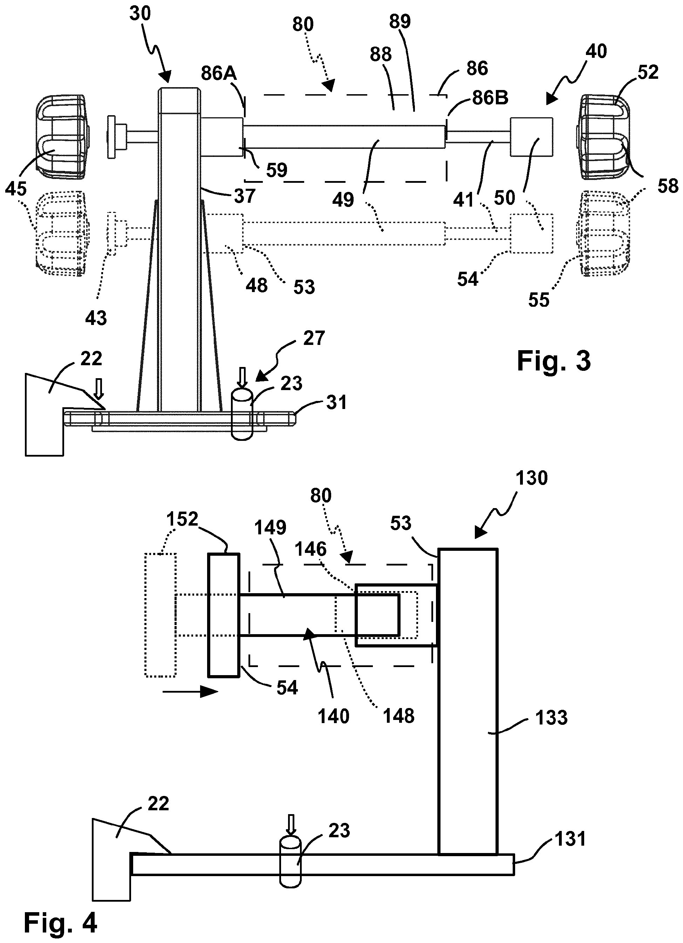

Bei dem in den Figuren 4 und 5 dargestellten Konzept einer Montageeinrichtung 140 sind teilweise gleiche oder ähnliche Komponenten verwendet wie bei der Montageeinrichtung 40. Möglichst sind Bezugsziffern verwendet, die um 100 größer sind als beim Ausführungsbeispiel gemäß Figur 1-3.

Ein Stützarm 133 einer Stütze 130 ist beispielsweise an einem Fuß 131 in der Art des Fußes 31 angeordnet und steht vor den Fuß 131 nach oben hin vor. An einer Seite 137 des Stützarms 133, die sozusagen derjenigen Seite des Stützarms 33 entspricht, an welcher die Widerlagerfläche 37 vorgesehen ist, ist ein Ankerkörper 143 bezüglich der Achse 97 verschieblich gelagert. Der Ankerkörper 143 ist beispielsweise in der Art eines Schlittens ausgestaltet, der in einer Lageraufnahme 135 verschieblich bezüglich der Achse 97 gelagert ist. In Figur 5 ist der Ankerkörper 143 in unterschiedlichen Höhenpositionen bezüglich der Achse 97 dargestellt, einmal in durchgezogenen und einmal in gestrichelten Linien.

Die Stütze 130 kann beispielsweise an oder in der Linearführung 17 beweglich gelagert sein. Die Stütze 130 kann anhand einer Befestigungseinrichtung, beispielsweise der erläuterten Verschraubung, aber auch der Klemme 22 oder des Riegels 23 am Tragkörper 12 ortsfest festlegbar sein.

Wenn der Ankerkörper 143 unter Zug steht, ist seine Verschieblichkeit bezüglich der Lageraufnahme 135 beispielsweise gehemmt oder sogar ganz unterbunden. Beispielsweise sind nämlich Formschlusskonturen an Längsseiten einer Stützplatte 144 des Ankerkörpers 143 vorgesehen, die in Nuten 145 der Lageraufnahme 135 eingreifen. In diesem Fall sind an den Nuten 145 zu den Formschlusskonturen des Schlittens oder Ankerkörpers 143 passende Formschlusskonturen vorgesehen, beispielsweise Zahnungen, Rillen oder dergleichen.

An dem Schlitten oder Ankerkörpers 143 ist ein Eingreifkörper 141 zum Eingriff in Durchtrittsöffnung 88 bzw. den Tretlager-Innenraum 89 des Tretlagers 86 vorgesehen. Man erkennt, dass man schon beim Aufstellen des Fahrrads 80 auf den Fahrradträger 10 die Durchtrittsöffnung 88 sozusagen auf den Eingreifkörper 141 aufstecken kann, so dass das Fahrrad 80 sozusagen vorläufig am Fahrradträger 10 festgelegt ist.

An dem Eingreifkörper 141 ist eine Schraubaufnahme 146 vorgesehen, in welche ein Schraubvorsprung 148, der einen weiteren Eingreifkörper 149 bildet, einschraubbar ist. Der Eingreifkörper 149 und der Eingreifkörper 141 sind also durch Verbindungsmittel, nämlich den Schraubvorsprung 148 und die Schraubaufnahme 146, miteinander verbindbar.

Am zu dem Schraubvorsprung 148 entgegengesetzten Längsendbereich des Eingreifkörpers 149 ist ein Stützkörper 152 in Gestalt beispielsweise eines Handrades vorgesehen, der mit dem Schraubvorsprung 148 drehfest verbunden ist. Somit kann also das Tretlager 86 zwischen die Stützflächen 53, 54 des Stützarms 133 bzw. des Stützkörpers 152 gespannt und geklemmt werden.

An dem Handrad oder Stützkörper 152 kann ebenfalls ein Schloss vorgesehen sein, um die Montageeinrichtung 40 zu verschließen. Es wäre beispielsweise denkbar, dass am Eingreifkörper 141 eine lösbare Drehkoppelung für den Stützkörper 152 (das Handrad) vorgesehen ist, die mit dem nicht dargestellten Schloss herstellbar oder lösbar ist.

Es ist auch möglich, dass beispielsweise der Eingreifkörper 41 und das Handrad 45 und/oder der Ankerkörper 43 fest miteinander verbunden oder aus einem Stück sind.

Aus den obigen Ausführungsbeispielen wurde schon ersichtlich, dass eine Anpassung der Position der Montageeinrichtung bezüglich der Abstellbereiche für die Fahrräder oder das Fahrrad vorteilhaft ist, beispielsweise um die Montageeinrichtung relativ zum Tretlager zu positionieren. Aber auch zur Positionierung einer sozusagen konventionellen Montageeinrichtung relativ zum Rahmen des Fahrrads, beispielsweise um diesen zu klemmen, ist es vorteilhaft, eine Stütze relativ zum Grundträger oder den Abstellbereichen für die Räder des Fahrrads optimal zu positionieren. Bei den nachfolgend erläuterten Ausführungsbeispielen wird eine relativ zu einem Grundträger optimal positionierbare Stütze erläutert, zudem auch eine weitere Variante einer Montageeinrichtung zum Halten eines Tretlagers mit einem seitlich offenen Tretlager-Innenraum.

Beim nachfolgenden Ausführungsbeispiel sind von den obigen Ausführungsbeispielen bekannte Komponenten mit denselben Bezugsziffern versehen.

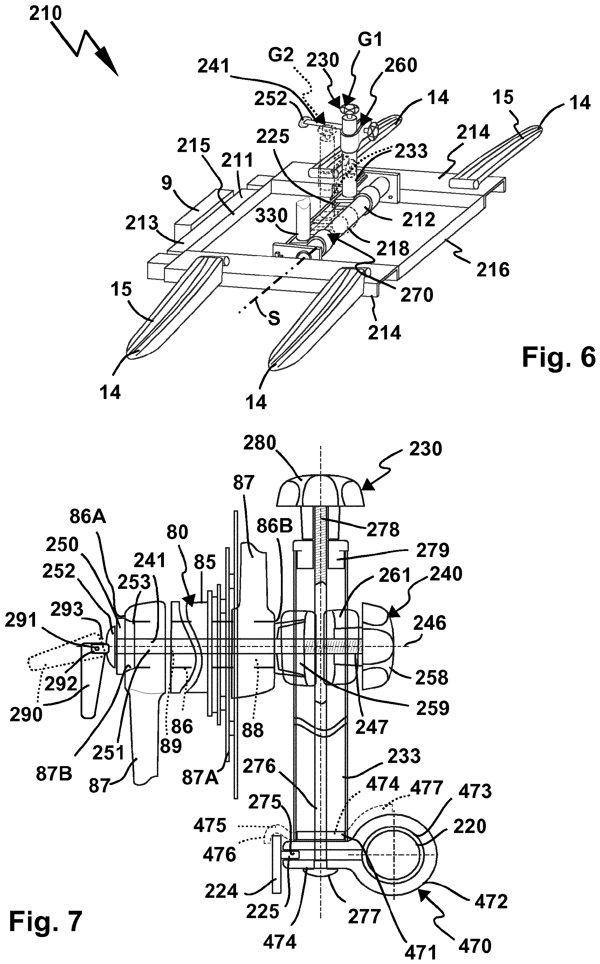

Bei dem Fahrradträger 210 gemäß Figuren 6-9 ist an einem Grundträger 211 ein Tragegestell 213 ortsfest oder beweglich angeordnet. Das Tragegestell 213 weist beispielsweise Längsträger 214 auf, die durch Querträger 215 und 216 miteinander verbunden sind. Die Längsträger 214 erstrecken sich in Fahrzeuglängsrichtung des Kraftfahrzeugs, an dem der Fahrradträger 210 angeordnet ist, während die Querträger 215 und 216 quer dazu verlaufen. Das Tragegestell 213 kann beispielsweise um eine Schwenkachse bezüglich des Grundträgers 211 geschwenkt werden, die parallel zu einem der Querträger 215 oder 216 verläuft.

Der Grundträger 211 ist beispielsweise mit einer Kupplungseinrichtung 9 an einer Anhängekupplung des Kraftfahrzeugs 90 befestigbar. Der Fahrradträger 210 könnte aber auch in der Art einer Schublade ausgestaltet sein, die aus dem Heck des Kraftfahrzeugs ausziehbar ist und in der Gebrauchsstellung vor das Heck vorsteht, sodass Fahrräder in der Art des Fahrrads 80 auf ihm abgestellt werden können.

An den Längsträgern 214 sind Trägerrinnen 14 schwenkbar gelagert, sodass sie in einem Zwischenraum zwischen die Längsträger 214 eingeschwenkt werden können, wenn sie nicht gebraucht werden, oder zur Seite ausgeschwenkt werden können, sodass sie seitlich vor die Längsträger 214 vorstehen und auf ihren Abstellbereichen 15 Fahrräder 80 abgestellt werden können.

Zwischen den Längsträgern 214 ist zusätzlich ein Tragkörper 212 vorgesehen, der eine Stütze 230 und eine Stütze 330 trägt. Der Tragkörper 212 bildet ein Lager 218, anhand dessen die Stützen 230, 330 zwischen verschiedenen Gebrauchsstellungen G1 und G2 (exemplarisch erläutert) und zweckmäßigerweise auch einer Nichtgebrauchsstellung N beweglich bezüglich des Grundträgers 211 oder des Tragegestells 213 gelagert sind. Die beiden Stützen 230, 330 sind entlang einer Stellachse S an dem Tragkörper 212 verschieblich gelagert, sodass sie zwischen mehreren Gebrauchsstellungen, beispielsweise den Gebrauchsstellungen G1 und G2, verschoben werden können, sodass gleichzeitig der Abstand einer jeweiligen Stütze 230, 330 zu den seitlichen Abstellbereichen 15 veränderbar ist.

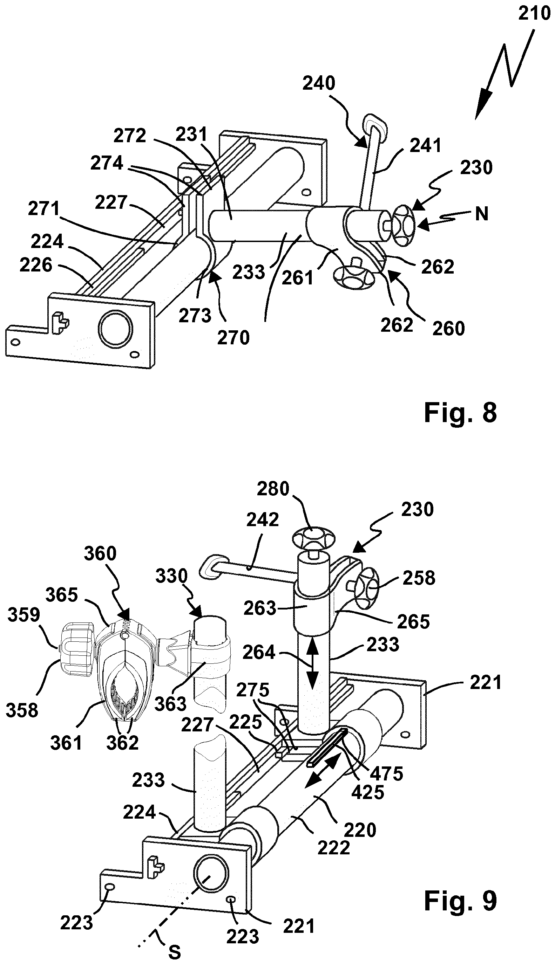

Zur Verstellung in die Nichtgebrauchsstellung N können die Stützen 230, 330 um die Stellachse S geschwenkt werden (siehe beispielsweise Figur 8). Dann stehen die Stützen 230, 330 weniger weit nach oben vor die Abstellbereiche 15 vor, sind also beispielsweise zum Tragegestell 213 oder in die Ebene des Tragegestells 213 verschwenkt. Beispielsweise erstrecken sich die Stützen 230, 330 in der Nichtgebrauchstellung N zwischen dem Tragkörper 212 und einem der Querträger 215, 216.

Der Tragkörper 212 erstreckt sich vorzugsweise parallel zu den Querträgern 215, 216. Der Tragkörper 212 hat zu den Querträgern 215, 216 etwa denselben Abstand. Der Tragkörper 212 dient zweckmäßigerweise als eine zusätzliche Strebe, die die Längsträger 214 miteinander verbindet. Er trägt vorteilhaft zur Steifigkeit des Tragegestells 213 bei.

Es ist aber auch möglich, einen Tragkörper bei einem erfindungsgemäßen Fahrradträger anders anzuordnen, so das beispielsweise einer der Querträger 215, 216 durch den Tragkörper gebildet ist oder dass der Tragkörper nahe bei einem derartigen Querträger angeordnet ist.

Weiterhin könnte die Stellachse S auch anders orientiert sein, d.h. nicht in Fahrzeugquerrichtung verlaufen, sondern Beispielweise in Fahrzeuglängsrichtung oder diagonal. So könnte der Tragkörper 212 sich prinzipiell zwischen Eckbereichen erstrecken, die zwischen einem jeweiligen Längsträger 214 und einem Querträger 215 oder 216 gebildet sind.

Der Tragkörper 212 umfasst beispielsweise ein Trägerprofil 222, insbesondere ein Rohr. Das Trägerprofil 222 hat vorzugsweise einen kreisrunden Außenumfang, sodass es sich optimal als Drehlager-Kontur eignet.

Der Tragkörper 212 ist an seitlichen Halteschenkeln 221 gehalten, die beispielsweise anhand einer Verschraubung mit den Längsträgern 214 verbunden sind. Beispielsweise sind Schraubaufnahmen 223 an den Halteschenkeln 221 vorgesehen, durch die in die Längsträger 214 eindringende Schrauben durchgesteckt werden können. Selbstverständlich ist es auch möglich, den Tragkörper 212 direkt mit den Längsträgern 214 zu verbinden, beispielsweise zu verschweißen oder zu verkleben. Die Halteschenkel 221 sind dann nicht notwendig.

Die Halteschenkel 221 tragen zudem einen Stützkörper 224, der parallel zum Tragkörper 212 verläuft. Mithin erstrecken sich also zwischen den Halteschenkeln 221 parallel verlaufend der Tragkörper 212 und der Stützkörper 224. Der Stützkörper ist beispielweise plattenartig.

Am Stützkörper 224 sind als Gegen-Formschlusskonturen 225 dienende Vorsprünge 226 vorhanden. Die Vorsprünge 226 stehende zum Tragkörper 212 vor. Zwischen den Vorsprüngen 226 ist ein Freiraum 227 vorhanden. Die Vorsprünge 226 erstrecken sich bis zu den Seitenschenkeln oder Halteschenkeln 221, sodass auch die Vorsprünge 226 von den Halteschenkeln 221 gehalten werden können oder gehalten sind.

Der Freiraum 227 ist vorzugsweise etwa quer mittig am Stützkörper 224 angeordnet. Es könnten auch mehrere Freiräume 227 entlang der Stellachse S vorgesehen sein, die einen Abstand zu einander haben.

Der Stützkörper 224 dient zum Abstützen der Stützen 230, 330 in deren jeweiligen Gebrauchsstellungen G. Die Stützen 230, 330 sind in ihren jeweiligen Gebrauchsstellungen G an dem Stützkörper 224, konkret an den Vorsprüngen 226, abgestützt. Zum Verstellen in Richtung der Nichtgebrauchstellung N können die Stützen 230, 330 durch den Freiraum 227 durchtauchen, was später noch erläutert wird.

Der Tragkörper 212 und der Stützkörper 224 sind zweckmäßigerweise als Trägerprofil ausgestaltet. Während der Tragkörper 212 ein Rohrprofil umfasst, hat der Stützkörper 224 eine im wesentlichen plattenartige Gestalt, abschnittsweise ist er T-förmig.

Prinzipiell sind die Stützen 230, 330 anhand einer Befestigungseinrichtung 270 an dem Tragkörper 212 ortsfest festlegbar. Die jeweilige Befestigungseinrichtung 270 umfasst eine Klemmeinrichtung 271. Die Klemmeinrichtung 271 umfasst eine Klemmschelle 272, die den Tragkörper 212 umschließt. Beispielsweise hat die Klemmschelle 272 einen Lagerabschnitt 273, der vom Tragkörper 212 durchdrungen ist. Von dem Lagerabschnitt 273 stehen Schenkel 274 der Klemmschelle 272 ab.

Wenn die Klemmschelle 271 gelöst ist, also ein größerer Abstand zwischen den Schenkeln 274 vorhanden ist und somit der Lagerabschnitt 273 aufgeweitet ist, kann der Lagerabschnitt 273 an dem Tragkörper 212 entlang gleiten, sodass die Stütze 230, 330 entlang der Stellachse S linear verschieblich und schwenkbar ist.

Wenn hingegen die Schenkel 274 zueinander zu bewegt sind, also miteinander verspannt sind, ist der Lagerabschnitt 273 verengt, so dass er den Tragkörper 212 klemmt.

Zudem ist aber noch eine formschlüssige Verdrehsicherung gegeben, weil nämlich in den Gebrauchsstellungen G1 und G2 oder anderen Gebrauchsstellungen, die nicht dargestellt sind, die freien Endbereiche der Schenkel 274 gleichzeitig noch die Gegen-Formschlusskonturen 225 sozusagen in die Zange nehmen, d.h. dass die Gegend-Formschlusskonturen 225 jeweils in den Zwischenraum zwischen den Schenkeln 274 der Klemmschelle 271 eingreift. Die freien Enden der Schenkel 274 bilden also Formschlusskonturen 275. Somit kann die Stütze 230, 330 selbst dann, wenn die Klemmschelle 271 etwas gelöst ist, also keine einwandfreie Verklemmung am Tragkörper 212 realisiert ist, nicht um die Stellachse S schwenken oder kippen. Dadurch ist eine hohe Betriebssicherheit realisiert. Weiterhin fängt der Formschluss zwischen den Formschlusskonturen 225, 275 eventuell auftretende Kraftspitzen, wenn die Stütze 230, 330 beim Fahrbetrieb des Kraftfahrzeugs 90 stark belastet ist, ab.

Zum Verstellen in die Nichtgebrauchsstellung N oder aus dieser heraus können die freien Enden der Schenkel 274 durch den Freiraum 227 durchtauchen. Dazu müssen die Stützen 230, 330 in den Bereich des Freiraums 227 entlang der Stellachse S verschoben werden.

Ein alternatives Formschlusskonzept ist in Figur 9 angedeutet. Beispielsweise kann eine Längsrippe oder ein sonstiger Vorsprung am Außenumfang des Tragkörpers 212 vorgesehen sein, der als eine Gegen-Formschlusskontur 425 dient. Durch eine Verschiebung der Stütze 230 entlang der Stellachse S kann eine als Nut ausgestaltete Formschlusskontur 475 am Innenumfang beispielsweise des Lagerabschnitts 273 der Klemmschelle 272 in Eingriff oder außer Eingriff mit der Gegen-Formschlusskontur 425 gebracht werden, sodass die Stütze 230 in der Gebrauchsstellung G1 oder G2 oder weiteren Gebrauchsstellungen, bei denen sie nach oben vor die Abstellbereiche 15 vorsteht, bezüglich der Stellachse S verdrehsicher gehalten ist.

Die Klemmeinrichtung 271 kann mittels eines nachfolgend anhand von insbesondere Figur 6 erläuterten Betätigungskonzepts leicht zwischen ihrer Klemmstellung oder Fixierstellung, in welcher sie den Tragkörper 212 klemmt, und einer Lösestellung, in welcher die Stütze 230, 330 bezüglich der Stellachse S an dem Lager 218 beweglich ist, verstellt werden.

Die Stütze 230, 330 umfasst beispielsweise einen Stützarm 233, dessen Fuß 231 an der Klemmschelle 272 abgestützt ist. Der Stützarm 233 ist als ein Hohlkörper oder Rohr ausgestaltet, der von einem Zugstab oder einem sonstigen Kraft-Übertragungselement 276 durchsetzt ist. Ohne weiteres wäre selbstverständlich auch eine sonstige Durchtrittsöffnung für ein Übertragungselement oder eine Übertragungsanordnung an einem Stützarm möglich.

Anhand des Übertragungselements 276 ist die Klemmschelle 272 und somit das Befestigungsmittel zwischen der Klemmstellung oder Fixierstellung und der Lösestellung betätigbar. Beispielsweise steht das stabartige Übertragungselement 276 nach unten vor den Fuß 231 vor und durchdringt die beiden Schenkel 274 der Klemmschelle 272. Am vom Fuß 231 weiter entfernten Schenkel 274 ist ein Widerlagerkörper 277 am Übertragungselement 276 vorgesehen, dass sich an diesem sozusagen äußeren Schenkel oder unteren Schenkel 274 abstützt und diesen in der Fixierstellung in Richtung des anderen Schenkels 274 belastet.

Dazu ist ein Handbetätigungselement 280 vorgesehen, dass auf einen Schraubabschnitt 278 des Übertragungselements 276 am zum Fuß 231 entgegengesetzten, anderen Endbereich des Stützarms 233 aufgeschraubt ist. Der Schraubabschnitt 278 oder jedenfalls das Übertragungselement 276 durchdringt zudem einen Führungskörper 279, der am oberen Endbereich oder vom Fuß 231 entfernten Endbereich des Stützarms 233 angeordnet ist. Der Führungskörper 279 ist beispielsweise in das Rohr des Stützarms 233 eingesteckt. Jedenfalls kann das Handbetätigungselement 280 bequem betätigt werden, da es am oberen, freien Endbereich der Stütze 230 oder 330 angeordnet ist.

In Figur 7 ist noch ein weiteres Befestigungskonzept anhand einer Befestigungseinrichtung 470 erläutert. Beispielsweise ist ein Lagerkörper 472 vorgesehen, der in der Seitenansicht ähnlich aussieht wie die Klemmschelle 272, allerdings nicht zur Verklemmung am Tragkörper 212 ausgestaltet ist oder dient, sondern zur beweglichen Lagerung der Stütze 230, 330 am Tragkörper 212. Der Lagerkörper 472 hat einen Lagerabschnitt 473 in der Art einer Lagerbuchse, welche vom Tragkörper 212 durchsetzt ist. Vom Lagerabschnitt 473 steht ein Tragabschnitt 474 ab, an dessen freiem Endbereich eine Formschlusskontur 275 in Gestalt einer Nut ausgebildet ist. In die Nut oder Formschlusskonturen 275 kann die Gegen-Formschlusskonturen 225 des Stützkörpers 224 in der Gebrauchsstellung oder einer der Gebrauchsstellungen G eingreifen.

Zusätzlich sorgt eine Klemmeinrichtung 471 für einen besonders festen Halt bei der Konfiguration gemäß Figur 7. Die Klemmeinrichtung 471 umfasst beispielsweise einen Klemmkörper 475, der anhand des Übertragungselements 276 zwischen der Lösestellung und der Fixierstellung betätigbar ist.

Beispielsweise wirkt der Fuß 231 der Stütze 230 anhand eines Druckstücks 474 von der einen Seite her auf den Klemmkörper 475, während von der anderen Seite her der Widerlagerkörper 271 den Lagerkörper 472 in Richtung des Druckstücks 474 betätigt und somit den Klemmkörper 475 in Richtung der Klemmstellung betätigt. Beispielsweise stützt sich der Klemmkörper 475 mit einem Klemmabschnitt 476 am Stützkörper 224 ab und mit einem Klemmabschnitt 477 am Tragkörper 212 oder am Lagerkörper 472. Der Klemmabschnitt 475 ist zweckmäßigerweise mit einer Formschlussaufnahme versehen, sodass er beispielsweise in einen Formschlusseingriff mit dem Stützkörper 224, zum Beispiel dessen oberer Kante oder dessen oberem Steg, gelangen kann.

An dem Stützarm 233 der Stütze 330 ist beispielsweise eine Montageeinrichtung 360 angeordnet, die zum Klemmen eines Rahmens eines Fahrrads, beispielsweise des Rahmens 84 des Fahrrads 80, dient. Die Montageeinrichtung 360 umfasst beispielsweise eine Klammer 361, mithin also eine Klemmeinrichtung, die durch ein Handrad 358 zwischen einer Lösestellung und einer Klemmstellung verstellbar ist. In der Klemmstellung sind Klammerschenkel 362 der Klammer 361 näher zueinander hin bewegt als in einer Lösestellung. Klammerschenkel 362 sind in an sich bekannter Weise schwenkbeweglich zueinander gelagert und sind von einem Zugstab 359 durchsetzt, auf den das Handrad 358 aufgeschraubt ist. Der Zugstab 359 seinerseits wiederum ist an einer Lagerhülse 363 befestigt, die sich beim Betätigen des Handrads 359 verengt oder aufweitet. In der Lagerhülse 363 ist der Stützarm 233 der Stütze 330 aufgenommen, das heißt dass die Lagerhülse 363 an dem Stützarm 233 der Stütze 330 verschieblich und drehbar gelagert ist.

In ähnlicher Weise ist eine Halterung 260 einer Montageeinrichtung 240, die zum Halten des Tretlagers 86 ausgestaltet ist, an der Stütze 230 beweglich gelagert. Die Halterung 260 umfasst eine Klammer 261, deren Klammerschenkel 262 durch einen Verbindungsabschnitt oder Lagerabschnitt 263 miteinander verbunden sind. Der Lagerabschnitt 263 ist von dem Stützarm 233 der Stütze 230 durchdrungen, an diesem also gelagert, sodass die Halterung 260 an dem Stützarm 233 dargestellt durch einen Doppelpfeil bezüglich einer Längsachse des Stützarms 233 verschieblich und zudem auch schwenkbar entlang der Längsachse des Stützarms 233 schwenkbar ist. Der Stützarm 233 stellt also eine Führung 264, insbesondere eine Linearführung oder Schwenklagerung, für die Halterung 260 bereit. Dadurch ist es möglich, die Halterung 260 optimal bezüglich des jeweils zu klemmenden oder haltenden Tretlagers 86 zu positionieren.

Ähnlich wie die Montageeinrichtung 240 können auch die bereits erläuterten Montageeinrichtungen 40, 140 an einer oder beiden der Stützen 230, 330 vorgesehen sein.

Weiterhin bildet die Klammer 261 oder die Halterung 260 eine Klemmeinrichtung 265, um die Montageeinrichtung 240 als Ganzes am Stützarm 233 ortsfest festzulegen.

Ein vorteilhaftes Konzept sieht dabei vor, dass die Halterung 260 bezüglich des Stützarms 233 und die Montageeinrichtung 240 bezüglich des Tretlagers 86 durch eine einzige Handbetätigungseinrichtung zwischen einer Lösestellung und einer Fixierstellung betätgbar sind. In der Lösestellung ist die Halterung 260 bezüglich des Stützarms 233 beweglich und das Tretlager 86 ist von der Montageeinrichtung 240 entfernbar. In der Fixierstellung ist das Tretlager 86 an der Montageeinrichtung 240 und somit der Stütze 230 befestigt und zudem auch die Halterung 260 ortsfest an dem Stützarm 230 festgelegt oder fixiert. Die Halterung 260 kann dabei bereits ihre Lösestellung einnehmen, wenn sie den Stützarm 233 nicht mehr klemmt und somit bezüglich des Stützarms 233 beweglich ist. Die Montageeinrichtung 240 hingegen nimmt ihre Lösestellung dann ein, wenn deren Komponenten zumindest teilweise voneinander entfernbar sind, was nachfolgend noch deutlich wird.

Die Montageeinrichtung 240 umfasst einen Eingreifkörper 241, beispielsweise einen Zugstab 242, der die Klammerschenkel 262 der Klammer 261 der Halterung 260 durchdringt (Figur 6). Auf einem vor die Klammer 261 vorstehenden Schraubabschnitt 247 ist ein Handrad 258 aufgeschraubt, während zu entgegengesetzten Seite hin der Eingreifkörper 241 zur Montage des Fahrrads 80, nämlich des Tretlagers 86, vorsteht.

Das Tretlager 86 kann zwischen einerseits die Klammer 261, die einen Widerlagerkörper 259 der Montageeinrichtung 240 bildet, und andererseits einen Stützkörper 252 am von der Klammer 261 entfernten Endbereich 251 des Eingreifkörpers 241 montiert und insbesondere verspannt werden. Der Eingreifkörper 241 ist als ein Zugstab 242 ausgestaltet oder weist einen solchen auf.

An dem Stützkörper 252 ist ein Distanzelement 250 abgestützt, dessen Stützfläche 253 beispielsweise in eine Eindringöffnungen 87B einer Kurbel 87 eingreift, die mit dem Tretlager-Innenraum 89 fluchtet. Die Stützflächen 253 sind beispielsweise konisch oder weisen Rundungen auf, sind jedenfalls mit ihrer Außenkontur an die Innenkontur der Eindringöffnung 87B der Kurbel 87 angepasst.

Die andere Kurbel 87 stützt sich beispielsweise flächig mit ihrer Stirnseite 86B an dem ihr zugewandten Klammerschenkel 262 der Klammer 261 ab. Aber auch dort könnte beispielsweise ein Distanzelement oder Stützelement in der Art des Stützkörpers oder Distanzelements 250 vorgesehen sein. Zwischen den Kurbeln 87 sind beispielsweise Kettenräder 87A vorgesehen.

Jedenfalls erkennt man, dass durch Aufschrauben des Handrads 258 auf den Schraubabschnitt 247 der Zugstab 242 das Fahrrad 80 mit der Montageeinrichtung 42 verspannt und gleichzeitig die Halterung 260 ortsfest am Stützarm 233 verklemmt.

Ein alternatives Betätigungskonzept mit einem Klemmhebel oder Kniehebel ist in Figur 7 angedeutet. Anstelle oder in Ergänzung des Handrads 258 kann nämlich auch beispielsweise ein Kipphebel oder Kniehebel oder Klemmhebel 290 im Bereich des Stützkörpers 252 vorgesehen sein. Als zugeordnetes Widerlager dient beispielsweise das Handrad 258 oder ein feststehendes Widerlager oder ein feststehender Anker, beispielsweise in den des Ankerkörpers 43 (Figur 2). Das Handrad 258 ermöglicht jedoch eine Längenanpassung bezüglich der Längsachse oder Schraubachse 246, als eine Anpassung an eine jeweilige Länge der Anordnung aus Kurbeln 87 und Tretlager 86 sowie zwischengeschaltetem Paket von Kettenrädern 87A.

Der Klemmhebel 290 kann beispielsweise mit dem Stützkörper 252 im Sinne einer Verklemmung zusammenwirken oder einen entsprechenden Stützkörper aufweisen. Der Klemmhebel 290 ist beispielsweise anhand eines Lagers 291 am Zugstab 242 befestigt und kann anhand des Lagers 291 um eine Schwenkachse 292 schwenken. Beispielsweise kann der Klemmhebel 290 in das Lager 291 eingehängt werden. Es ist auch möglich, das Lager 291 auf den Eindringkörper 241 aufzuschrauben (was eine Längenanpassung ermöglicht), anhand einer Hakenanordnung zu verhaken oder dergleichen, und so die Verbindung zwischen Klemmhebel 290 und Eindringkörper 241 herzustellen. Jedenfalls ist eine lösbare Verbindung zwischen einerseits dem Klemmhebel 290 und andererseits dem Eindringkörper 241 vorteilhaft.

Im Bereich des Lagers 291 hat der Klemmhebel 290 eine Betätigungsfläche 293, die in einer in durchgezogenen Linien dargestellten Position des Klemmhebel 290 den Stützkörper 252 betätigt, sodass der Stützkörper 252 mit der Stirnseite 86A des Tretlagers 86 oder der Kurbel 87 verspannt ist. Wenn der Klemmhebel 292 jedoch die in gestrichelten Linien dargestellte Lösestellung einnimmt, ist die Betätigungsfläche 293 vom Stützkörper 252 weiter entfernt und lässt diesem ein Bewegungsspiel zu, sodass die Verspannung des Tretlagers 86 an der Montageeinrichtung 240 gelöst ist.

## Patentansprüche

1. Fahrradträger zur Anordnung an einem Heck eines Kraftfahrzeugs (90), mit einem Grundträger (211), an welchem Abstellbereiche (15) zum Abstellen eines Fahrrads (80) vorgesehen sind und der einen Tragkörper (212) aufweist, an dem mindestens eine Stütze (30, 130, 230, 330) anhand eines Lagers (18, 218) beweglich gelagert ist, wobei die mindestens eine Stütze (30, 130, 230, 330) in einer Gebrauchsstellung (G1, G2) zum Abstützen eines auf den Abstellbereichen (15) abgestellten Fahrrads (80) nach oben vor die Abstellbereiche (15) vorsteht und an der Stütze (30, 130, 230, 330) eine Montageeinrichtung (40; 140; 240) zur lösbaren Befestigung des Fahrrads (80) angeordnet ist, wobei die Stütze (30, 130, 230, 330) anhand des Lagers (18, 218) zwischen mindestens zwei voneinander verschiedenen zum Abstützen vorgesehenen Gebrauchsstellungen (G1, G2) an dem Tragkörper (12, 212) bezüglich mindestens einer Stellachse (S) verstellbar ist, wobei die mindestens eine Stütze (30, 130, 230, 330) anhand einer Befestigungseinrichtung (27, 270) des Fahrradträgers in den mindestens zwei Gebrauchsstellungen (G1, G2) bezüglich des Tragkörpers (212) ortsfest festlegbar ist, wobei die mindestens eine Stütze (30, 130, 230, 330) in den Gebrauchsstellungen (G1, G2) bezüglich der Stellachse (S) anhand mindestens einer der Stütze (30, 130, 230, 330) zugeordneten Formschlusskontur (275) und mindestens einer dem Tragkörper (12, 212) zugeordneten Gegen-Formschlusskontur (225) bezüglich der Stellachse (S) verdrehgesichert ist, **dadurch gekennzeichnet, dass** neben der mindestens einen Gegen-Formschlusskontur (225) ein Freiraum (227) für die der Stütze (30, 130, 230, 330) zugeordnete Formschlusskontur (275) vorgesehen ist, durch den die mindestens eine Formschlusskontur an der Gegen-Formschlusskontur (225) um die Stellachse (S) vorbei schwenken kann.

2. Fahrradträger nach Anspruch 1, **dadurch gekennzeichnet, dass** die mindestens eine Stütze (30, 130, 230, 330) anhand des Lagers (18, 218) zwischen den mindestens zwei Gebrauchsstellungen (G1, G2) und einer Nichtgebrauchsstellung bezüglich des Tragkörpers (12, 212) oder des Grundträgers (211) beweglich gelagert (18, 218) ist, wobei die mindestens eine Stütze (30, 130, 230, 330) in der Nichtgebrauchstellung (N) näher zu dem Grundträger (211) hin verstellt ist, insbesondere an dem Grundträger (211) oder einem an dem Grundträger (211) angeordneten Traggestell anliegt, als in den Gebrauchsstellungen (G1, G2).

3. Fahrradträger nach Anspruch 1 oder 2, **dadurch gekennzeichnet, dass** die mindestens eine Formschlusskontur (275) eine Verriegelungsaufnahme und ein Riegelelement umfasst, die in einer Verriegelungsstellung in Eingriff und in einer Lösestellung außer Eingriff sind.

4. Fahrradträger nach einem der vorhergehenden Ansprüche, **dadurch gekennzeichnet, dass** die mindestens eine Gegen-Formschlusskontur (225) eine sich entlang der Stellachse (S) erstreckende, insbesondere als Nut oder Vorsprung (226) ausgestaltete Gegen-Formschlusskontur (225) aufweist und/oder an dem Tragkörper (12, 212) oder einem neben dem Tragkörper (12, 212) angeordneten oder verlaufenden Stützkörper (224) angeordnet ist.

5. Fahrradträger nach einem der vorhergehenden Ansprüche, **dadurch gekennzeichnet, dass** das Lager (218) ein Schiebelager (218) umfasst, anhand dessen die mindestens eine Stütze (30, 130, 230, 330) entlang der Stellachse (95, S) zwischen den mindestens zwei Gebrauchsstellungen (G1, G2) verschieblich, insbesondere linear verschieblich, ist, und/oder das Lager (218) ein Schwenklager umfasst, anhand dessen die mindestens eine Stütze (30, 130, 230, 330) um die eine Schwenkachse bildende Stellachse (S) schwenkbar zwischen den mindestens zwei Gebrauchsstellungen (G1, G2) verstellbar ist.

6. Fahrradträger nach einem der vorhergehenden Ansprüche, **dadurch gekennzeichnet, dass** sich die Stellachse (S) quer zu einer Fahrtrichtung des Kraftfahrzeugs (90) erstreckt und/oder die mindestens eine Stütze (30, 130, 230, 330) um die Stellachse (S) schwenkbar und entlang der Stellachse (S) verschieblich bezüglich des Tragkörpers (12, 212) gelagert ist.

7. Fahrradträger nach einem der vorhergehenden Ansprüche, **dadurch gekennzeichnet, dass** an dem Tragkörper (12, 212), insbesondere dem Lager (18, 218), eine erste Stütze (30, 130, 230, 330) und mindestens eine zweite Stütze (30, 130, 230, 330) zwischen jeweils mindestens zwei Gebrauchsstellungen (G1, G2) beweglich gelagert ist.

8. Fahrradträger nach einem der vorhergehenden Ansprüche, **dadurch gekennzeichnet, dass** die mindestens eine Stütze (30, 130, 230, 330) in zumindest einer Gebrauchsstellung (G1, G2) an einem neben dem Tragkörper (12, 212) angeordneten oder verlaufenden Stützkörper (224), insbesondere in zumindest einer Drehrichtung bezüglich der Stellachse (S), abgestützt ist.

9. Fahrradträger nach einem der vorhergehenden Ansprüche, **dadurch gekennzeichnet, dass** die Befestigungseinrichtung (27, 270) eine Klemmeinrichtung (271) zum Verklemmen der mindestens eine Stütze (30, 130, 230, 330) bezüglich des Tragkörpers (12, 212) und/oder an dem Tragkörper (12, 212) und/oder an einem neben dem Tragkörper (12, 212) angeordneten oder verlaufenden Stützkörper (224) umfasst, wobei die Klemmeinrichtung (271) zweckmäßigerweise einen insbesondere als Klemmschelle (271) ausgestalteten Klemmkörper (475) aufweist, der von dem insbesondere als Trägerprofil ausgestalteten Tragkörper (12, 212) durchdrungen ist oder neben dem Tragkörper (12, 212) angeordnet ist.

10. Fahrradträger nach einem der vorhergehenden Ansprüche, **dadurch gekennzeichnet, dass** ein Klemmkörper (475) der Befestigungseinrichtung (27, 270) oder ein Widerlagerkörper der Befestigungseinrichtung (27, 270) die Formschlusskontur (275) aufweist oder bildet und in Eingriff mit der dem Tragkörper (12, 212) zugeordneten, insbesondere neben dem Tragkörper (12, 212) angeordneten, Gegen-Formschlusskontur (225) bringbar ist.

11. Fahrradträger nach einem der vorhergehenden Ansprüche, **dadurch gekennzeichnet, dass** die Befestigungseinrichtung (27, 270) eine Klemmschelle (272) umfasst, von der ein freier Endbereich oder deren freie Endbereiche mit der dem Tragkörper (12, 212) zugeordneten Gegen-Formschlusskontur (225) in einen insbesondere klemmenden Eingriff bringbar ist oder sind.

12. Fahrradträger nach einem der vorhergehenden Ansprüche, **dadurch gekennzeichnet, dass** ein Handbetätigungselement (280), insbesondere ein Handrad, der Befestigungseinrichtung (27, 270) an einem von dem Tragkörper (12, 212) entfernten Endbereich der mindestens einen Stütze (30, 130, 230, 330) angeordnet ist, wobei das Handbetätigungselement (280) durch mindestens ein Übertragungselement (276) mit im Bereich des Tragkörpers (12, 212) angeordneten Befestigungsmitteln der Befestigungseinrichtung (27, 270) bewegungsgekoppelt ist, die anhand des Handbetätigungselements (280) zwischen einer Lösestellung, in welcher die mindestens eine Stütze (30, 130, 230, 330) bezüglich des Tragkörpers (12, 212) verstellbar ist, und einer Fixierstellung, in welcher die mindestens eine Stütze (30, 130, 230, 330) bezüglich des Tragkörpers (12, 212) ortsfest festgelegt ist, betätigbar sind.

13. Fahrradträger nach einem der vorhergehenden Ansprüche, **dadurch gekennzeichnet, dass** der Tragkörper (12, 212) oder ein neben dem Tragkörper (12, 212) angeordneter oder verlaufender Stützkörper (224) als ein Trägerprofil ausgestaltet ist oder ein Trägerprofil umfasst und/oder einen Bestandteil, insbesondere eine Strebe, eines Tragegestells (213) bildet, wobei das Tragegestell (213) an dem Grundträger (211) ortsfest oder beweglich angeordnet ist oder den Grundträger (211) bildet.

14. Fahrradträger nach einem der vorhergehenden Ansprüche, **dadurch gekennzeichnet, dass** die Montageeinrichtung (40; 140; 240) zum Halten des Fahrrads abseits seiner Räder (81,82) ausgestaltet ist und insbesondere zur Befestigung des Fahrrads eine Klemmeinrichtung (271), insbesondere eine Klemmschelle (271), und/oder mindestens einen langgestreckten Eingreifkörper (41; 141, 149) zum Eingriff in einen insbesondere als Durchtrittsöffnung (88) ausgestalteten Tretlager-Innenraum (89) eines Tretlagers (86) des Fahrrads (80) aufweist, der sich entlang der Drehachse des Tretlagers (86) erstreckt, und einen Stützkörper (52; 152) und einen Widerlagerkörper (59) aufweist, die in einem montierten und das Fahrrad (80) haltenden Haltezustand der Montageeinrichtung (40; 140; 240) einander gegenüberliegen und voneinander abgewandte Stirnseiten (86A, 86B) des Tretlagers (86) oder einer neben dem Tretlager (86) angeordneten Komponente des Fahrrads (80), insbesondere eines das Tretlager (86) aufnehmenden Rahmenbereichs des Rahmens (84), stützen, wobei sich in dem Haltezustand der mindestens eine Eingreifkörper (41; 141, 149) zwischen dem Widerlagerkörper (59) und dem Stützkörper (52; 152) erstreckt und in den Tretlager-Innenraum (89) eingreift.

## Claims

1. Cycle rack for fitting to a rear of a motor vehicle (90), with a base support (211) on which loading areas (15) for the loading of a cycle (80) are provided, and which has a carrying body (212) on which at least one support (30, 130, 230, 330) is movably mounted with the aid of a bearing (18, 218), wherein the support or supports (30, 130, 230, 330), in a position of use (G1, G2), extends or extend upwards in front of the loading areas (15) to support a cycle (80) mounted on the loading areas (15), and on the support (30, 130, 230, 330) is fitted a mounting fixture (40; 140; 240) for releasable fastening of the cycle (80), wherein the support (30, 130, 230, 330) is adjustable with the aid of the bearing (18, 218) between at least two different positions of use (G1, G2) provided for support on the carrying body (12, 212) with respect to at least one adjusting axis (S), wherein the support or supports (30, 130, 230, 330) may be fixed immovably with the aid of a fastening device (27, 270) of the cycle rack in the two or more positions of use (G1, G2) with respect to the carrying body (212), wherein the support or supports (30, 130, 230, 330) in the positions of use (G1, G2) with respect to the adjusting axis (S) is or are anti-twist-locked with respect to the adjusting axis (S) with the aid of at least one interlocking contour (275) assigned to the support (30, 130, 230, 330) and at least one mating interlocking contour (225) assigned to the carrying body (12, 212), **characterised in that** there is provided next to the mating interlocking contour or contours (225) an open space (227) for the interlocking contour (275) assigned to the support (30, 130, 230, 330), through which the interlocking contour or contours can swivel past the mating interlocking contour (225) around the adjusting axis (S).

2. Cycle rack according to claim 1, **characterised in that** the support or supports (30, 130, 230, 330) is or are movably mounted with the aid of the bearing (18, 218) between the two or more positions of use (G1, G2) and an inoperative position relative to the carrying body (12, 212) or the base support (211), wherein the support or supports (30, 130, 230, 330) in the inoperative position (N) is or are shifted closer to the base support (211), in particular in contact with the base support (211) or a support frame mounted on the base support (211), than in the positions of use (G1, G2).

3. Cycle rack according to claim 1 or 2, **characterised in that** the interlocking contour or contours (275) includes or include a locking location and a sliding bolt element, which are engaged in a locked position and disengaged in a release position.

4. Cycle rack according to any of the preceding claims, **characterised in that** the mating interlocking contour or contours (225) has or have a mating interlocking contour (225) extending along the adjusting axis (S), in particular in the form of a slot or projection, and/or located on the carrying body (12, 212) or a support body (224) located or running next to the carrying body (12, 212).

5. Cycle rack according to any of the preceding claims, **characterised in that** the bearing (218) comprises a sliding bearing (218), with the aid of which the support or supports (30, 130, 230, 330) may be shifted, in particular in a linear manner, along the adjusting axis (95, S) between the two or more positions of use (G1, G2), and/or the bearing (218) includes a swivel bearing, with the aid of which the support or supports (30, 130, 230, 330) may be moved by swivelling around the adjusting axis (S) forming the one swivel axis, between the two or more positions of use (G1, G2).

6. Cycle rack according to any of the preceding claims, **characterised in that** the adjusting axis (S) extends at right-angles to a direction of running of the motor vehicle (90), and/or the support or supports (30, 130, 230, 330) is or are mounted pivotably around the adjusting axis (S) and movable along the adjusting axis (S) relative to the carrying body (12, 212).

7. Cycle rack according to any of the preceding claims, **characterised in that** on the carrying body (12, 212), in particular the bearing (18, 218), a first support (30, 130, 230, 330) and at least one second support (30, 130, 230, 330) are movably mounted between at least two positions of use (G1, G2) in each case.

8. Cycle rack according to any of the preceding claims, **characterised in that** the support or supports (30, 130, 230, 330) is or are supported in at least one position of use (G1, G2) on a support body (224) fitted or running next to the carrying body (12, 212), in particular in at least one direction of rotation relative to the adjusting axis (S).

9. Cycle rack according to any of the preceding claims, **characterised in that** the fastening device (27, 270) includes a clamping device (271) for clamping the support or supports (30, 130, 230, 330) relative to the carrying body (12, 212), and/or to a support body (224) mounted or running next to the carrying body (12, 212), wherein the clamping device (271) expediently has a clamping body (475), in particular in the form of a clamp (271) which is penetrated by the carrying body (12, 212), in particular in the form of a support profile, or is mounted next to the carrying body (12, 212).

10. Cycle rack according to any of the preceding claims, **characterised in that** a clamping body (475) of the fastening device (27, 270) or a thrust bearing body of the fastening device (27, 270) has or forms the interlocking contour (275) and may be brought into engagement with the mating interlocking contour (225) assigned to the carrying body (12, 212), and in particular located next to the carrying body (12, 212).

11. Cycle rack according to any of the preceding claims, **characterised in that** the fastening device (27, 270) includes a clamp (272) which may be brought into or is in engagement, in particular clamping engagement, with the mating interlocking contour (225) assigned to the carrying body (12, 212).

12. Cycle rack according to any of the preceding claims, **characterised in that** a manual actuation element (280), in particular a hand wheel, of the fastening device (27, 270), is located on an end section of the support or supports (30, 130, 230, 330) situated away from the carrying body (12, 212), wherein the manual actuation element (280) is movement-coupled by at least one transmission element (276) to fastening means of the fastening device (27, 270) located in the area of the carrying body (12, 212), which may be actuated with the aid of the manual actuation element (280) between a release position in which the support or supports (30, 130, 230, 330) may be adjusted relative to the carrying body (12, 212), and a fixing position in which the support or supports (30, 130, 230, 330) is or are fixed immovably relative to the carrying body (12, 212).

13. Cycle rack according to any of the preceding claims, **characterised in that** the carrying body (12, 212) or a support body (224) mounted or running next to the carrying body (12, 212) is designed as a support profile or includes a support profile and/or a forms a part, in particular a strut, of s support frame (213), wherein the support frame (213) is mounted immovably or movably on the base support (211) or forms the base support (211).

14. Cycle rack according to any of the preceding claims, **characterised in that** the mounting fixture (40; 140; 240) is designed for holding the cycle at a distance from its wheels (81, 82), and in particular for fastening the cycle a clamping device (271), in particular has a clamp (271), and/or at least one elongated engaging body (41; 141, 149) for engagement in a bottom bracket interior (89) of a bottom bracket (86) of the cycle (80), in particular in the form of a through opening (88), and which extends along the axis of rotation of the bottom bracket (86), and has a support body (52, 152) and a thrust bearing body (59) which, in a holding state of the mounting fixture (40; 140; 240), when fitted and holding the cycle (80), support end faces (86A, 86B) of the bottom bracket (86) lying opposite and facing away from one another, or a component of the cycle (80) located next to the bottom bracket (86), in particular a frame section of the frame (84) holding the bottom bracket (86) wherein, in the holding state, the engaging body or bodies(41; 141, 149) extends or extend between the thrust bearing body (59) and the support body (52, 152) and engages or engage in the bottom bracket interior (89).

## Revendications

1. Porte-vélo à agencer à l'arrière d'un véhicule automobile (90), avec un support de base (211), au niveau duquel des zones de dépôt (15) pour le dépôt d'un vélo (80) sont prévues et qui présente un corps de support (212), au niveau duquel au moins un support (30, 130, 230, 330) est logé mobile à l'aide d'un palier (18, 218), dans lequel l'au moins un support (30, 130, 230, 330) fait saillie des zones de dépôt (15) vers le haut dans une position d'utilisation (G1, G2) pour supporter un vélo (80) déposé sur les zones de dépôt (15) et un dispositif de montage (40 ; 140 ; 240) pour la fixation amovible du vélo (80) est logé au niveau du support (30, 130, 230, 330), dans lequel le support (30, 130, 230, 330) est réglable à l'aide du palier (18, 218) entre au moins deux positions d'utilisation (G1, G2) différentes l'une de l'autre prévues pour le support au niveau du corps de support (12, 212) par rapport à au moins un axe de réglage (S), dans lequel l'au moins un support (30, 130, 230, 330) est fixable fixe à l'aide d'un dispositif de fixation (27, 270) du porte-vélo dans les au moins deux positions d'utilisation (G1, G2) par rapport au corps de support (212), dans lequel l'au moins un support (30, 130, 230, 330) est protégé contre les torsions dans les positions d'utilisation (G1, G2) par rapport à l'axe de réglage (S) à l'aide d'au moins un contour de correspondance de forme (275) affecté au support (30, 130, 230, 330) et d'au moins un contre-contour de correspondance de forme (225) affecté au corps de support (12, 212), **caractérisé en ce qu'**à côté de l'au moins un contre-contour de correspondance de forme (225), un espace libre (227) est prévu pour le contour de correspondance de forme (275) affecté au support (30, 130, 230, 330), par lequel l'au moins un contour de correspondance de forme peut pivoter devant le contre-contour de correspondance de forme (225) autour de l'axe de réglage (S).

2. Porte-vélo selon la revendication 1, **caractérisé en ce que** l'au moins un support (30, 130, 230, 330) est logé mobile (18, 218) à l'aide du palier (18, 218) entre les au moins deux positions d'utilisation (G1, G2) et une position de non-utilisation par rapport au corps de support (12, 212) ou du support de base (211), dans lequel l'au moins un support (30, 130, 230, 330) est réglé dans la position de non-utilisation (N) plus près du support de base (211), s'applique en particulier sur le support de base (211) ou un châssis porteur agencé au niveau du support de base (211), que dans les positions d'utilisation (G1, G2).

3. Porte-vélo selon la revendication 1 ou 2, **caractérisé en ce que** l'au moins un contour de correspondance de forme (275) comprend un logement de verrouillage et un élément de verrou qui sont en prise dans une position de verrouillage et hors prise dans une position de libération.

4. Porte-vélo selon l'une quelconque des revendications précédentes, **caractérisé en ce que** l'au moins un contre-contour de correspondance de forme (225) présente un contre-contour de correspondance de forme (225) configuré en particulier en tant que rainure ou saillie (226), s'étendant le long de l'axe de réglage (S) et/ou est agencé au niveau du corps de support (12, 212) ou d'un corps d'appui (224) s'étendant ou agencé à côté du corps de support (12, 212).

5. Porte-vélo selon l'une quelconque des revendications précédentes, **caractérisé en ce que** le palier (218) comprend un palier coulissant (218), à l'aide duquel l'au moins un support (30, 130, 230, 330) est mobile le long de l'axe de réglage (95, S) entre les au moins deux positions d'utilisation (G1, G2), en particulier linéairement mobile, et/ou le palier (218) comprend un palier pivotant, à l'aide duquel l'au moins un support (30, 130, 230, 330) est réglable entre les au moins deux positions d'utilisation (G1, G2) de manière pivotante autour de l'axe de réglage (S) formant l'axe de pivotement.

6. Porte-vélo selon l'une quelconque des revendications précédentes, **caractérisé en ce que** l'axe de réglage (S) s'étend transversalement à une direction de conduite du véhicule (90) et/ou l'au moins un support (30, 130, 230, 330) est logé de manière pivotante autour de l'axe de réglage (S) et mobile le long de l'axe de réglage (S) par rapport au corps de support (12, 212).

7. Porte-vélo selon l'une quelconque des revendications précédentes, **caractérisé en ce qu'**un premier support (30, 130, 230, 330) et au moins un deuxième support (30, 130, 230, 330) est logé mobile entre respectivement au moins deux positions d'utilisation (G1, G2) au niveau du corps de support (12, 212), en particulier du palier (18, 218).

8. Porte-vélo selon l'une quelconque des revendications précédentes, **caractérisé en ce que** l'au moins un support (30, 130, 230, 330) est supporté dans au moins une position d'utilisation (G1, G2) au niveau d'un corps d'appui (224) s'étendant ou agencé à côté du corps de support (12, 212), en particulier dans au moins un sens de rotation par rapport à l'axe de réglage (S).

9. Porte-vélo selon l'une quelconque des revendications précédentes, **caractérisé en ce que** le dispositif de fixation (27, 270) comprend un dispositif de serrage (271) pour le serrage de l'au moins un support (30, 130, 230, 330) par rapport au corps de support (12, 212) et/ou au niveau du corps de support (12, 212) et/ou au niveau d'un corps d'appui (224) s'étendant ou agencé à côté du corps de support (12, 212), dans lequel le dispositif de serrage (271) présente de manière appropriée un corps de serrage (475) configuré en particulier en tant que collier de serrage (271), qui est traversé par le corps de support (12, 212) configuré en particulier en tant que profil de support ou est agencé à côté du corps de support (12, 212).

10. Porte-vélo selon l'une quelconque des revendications précédentes, **caractérisé en ce qu'**un corps de serrage (475) du dispositif de fixation (27, 270) ou un corps de butée du dispositif de fixation (27, 270) présente ou forme le contour de correspondance de forme (275) et peut être mis en prise avec le contre-contour de correspondance de forme (225) affecté au corps de support (12, 212), agencé en particulier à côté du corps de support (12, 212).

11. Porte-vélo selon l'une quelconque des revendications précédentes, **caractérisé en ce que** le dispositif de fixation (27, 270) comprend un collier de serrage (272), duquel une zone d'extrémité libre ou ses zones d'extrémité libres peut ou peuvent être amenée(s) en prise en particulier de serrage avec le contre-contour de correspondance de forme (225) affecté au corps de support (12, 212).

12. Porte-vélo selon l'une quelconque des revendications précédentes, **caractérisé en ce qu'**un élément d'actionnement manuel (280), en particulier un volant, du dispositif de fixation (27, 270) est agencé au niveau d'une zone d'extrémité de l'au moins un support (30, 130, 230, 330) éloignée du corps de support (12, 212), dans lequel l'élément d'actionnement manuel (280) est couplé en mouvement par au moins un élément de transfert (276) avec des moyens de fixation du dispositif de fixation (27, 270) agencés dans la zone du corps de support (12, 212), qui sont actionnables à l'aide de l'élément d'actionnement manuel (280) entre une position de libération, dans laquelle l'au moins un support (30, 130, 230, 330) est réglable par rapport au corps de support (12, 212), et une position de fixation, dans laquelle l'au moins un support (30, 130, 230, 330) est fixé fixe par rapport au corps de support (12, 212).

13. Porte-vélo selon l'une quelconque des revendications précédentes, **caractérisé en ce que** le corps de support (12, 212) ou un corps d'appui (224) s'étendant ou agencé à côté du corps de support (12, 212) est réalisé en tant que profil de support ou comprend un profil de support et/ou forme un élément constitutif, en particulier une entretoise, d'un châssis porteur (213), dans lequel le châssis porteur (213) est agencé fixe ou mobile au niveau du support de base (211) ou forme le support de base (211).

14. Porte-vélo selon l'une quelconque des revendications précédentes, **caractérisé en ce que** le dispositif de montage (40 ; 140 ; 240) est configuré pour retenir le vélo à l'écart de ses roues (81, 82) et présente en particulier pour la fixation du vélo, un dispositif de serrage (271), en particulier un collier de serrage (271), et/ou au moins un corps de mise en prise allongé (41 ; 141, 149) pour la prise dans un espace intérieur de pédalier (89) d'un pédalier (86) du vélo (80) configuré en particulier en tant qu'ouverture de passage (88), qui s'étend le long de l'axe de rotation du pédalier (86), et présente un corps d'appui (52 ; 152) et un corps de butée (59), qui se font face l'un l'autre dans un état de retenue retenant le vélo (80) et monté du dispositif de montage (40 ; 140; 240) et soutiennent des faces frontales (86A, 86B) opposées les unes aux autres du pédalier (86) ou d'un composant agencé à côté du pédalier (86), du vélo (80), en particulier d'une zone de cadre du cadre (84) logeant le pédalier (86), dans lequel l'au moins un corps de mise en prise (41 ; 141, 149) s'étend entre le corps de butée (59) et le corps d'appui (52 ; 152) dans l'état de retenue et entre en prise dans l'espace intérieur de pédalier (89).
